# EUROPÄISCHE PATENTANMELDUNG

(11) **EP 4 686 729 A1**
(43) Veröffentlichungstag der Anmeldung: **04.02.2026**
(21) Anmeldenummer: 25193544.1
(22) Anmeldetag: 01.08.2025
(51) Int. Cl.: C08G 77/26, C08G 77/388, C09D 183/08

(54) **ZWITTERIONISCHE POLYSILOXANE**

(30) Priorität: 02.08.2024 EP 24192651
(71) Anmelder: Rudolf GmbH, 82538 Geretsried (DE)
(72) Erfinder: Brunner, Christoph, 82547 Eurasburg (DE); Hayessen, Rainer, 82538 Geretsried (DE); Sielemann, Dirk, 82515 Wolfratshausen (DE)
(74) Vertreter: Weickmann & Weickmann PartmbB

(57) **Zusammenfassung**

Die vorliegende Erfindung betrifft Polysiloxane mit zwitterionischen Gruppen, deren Herstellung, Zusammensetzungen umfassend solche Polysiloxane und die Verwendung dieser Polysiloxane oder Zusammensetzungen zur Behandlung von Substraten.

## Beschreibung

Die vorliegende Erfindung betrifft Polysiloxane mit zwitterionischen Gruppen, deren Herstellung, Zusammensetzungen umfassend solche Polysiloxane und die Verwendung dieser Polysiloxane oder Zusammensetzungen zur Behandlung von Substraten.

Polysiloxane werden vielfältig zur Ausrüstung von Textilmaterialien verwendet. Aufgrund ihrer flexiblen Struktur und ihrer leichten Funktionalisierbarkeit können sie maßgeschneidert für eine Reihe unterschiedlicher Anwendungen eingesetzt werden.

Aminomodifizierte Polysiloxane werden schon seit Längerem als Weichgriffmittel verwendet. Üblicherweise werden sie als flüssige Zubereitungen in Form von wässrigen Emulsionen auf das Textil aufgebracht. Die aminomodifizierten Polysiloxane bilden in Wasser bei saurem pH-Wert unter Zugabe von Emulgatoren stabile Emulsionen.

Die beschriebenen Formulierungen haben jedoch eine Reihe von Nachteilen wie eine geringe Stabilität unter alkalischen Bedingungen, eine hohe Empfindlichkeit gegenüber Salzen und Anionen und eine schlechte Beständigkeit gegenüber Scherbeanspruchung während der Anwendung auf modernen Veredelungsmaschinen. Nachteilig ist außerdem eine ausgeprägte thermische Vergilbungstendenz der behandelten Substrate, insbesondere bei Trocknungstemperaturen über 120 °C.

Viele textile Vorbehandlungsprozesse erfordern jedoch die Anwendung hoher pH-Werte in den wässrigen Behandlungsbädern. So ist bei der Vorbehandlung, dem Bleichen und Färben zellulosischer Substrate stets die Verwendung hoher Mengen von Alkalien notwendig. Wird nach solchen Verfahrensschritten nicht ausreichend neutralisiert und sorgfältig ausgewaschen, werden basische Bestandteile in die nachfolgende Behandlungsflotten mit Weichgriffmitteln verschleppt, was zur Destabilisierung von Emulsionen aminofunktioneller Polysiloxane führen kann. Die Destabilisierung der Emulsionen unter alkalischen Bedingungen ist auf eine Deprotonierung der aminofunktionellen Gruppen des Polysiloxans zurückzuführen. Ohne die kationischen Ladungen am Polysiloxan koaguliert die Mikroemulsion. Das entstandene Koagulat scheidet sich heterogen auf das zu behandelnde Textil ab und verursacht Flecken auf dem Textilgut.

Emulsionen von Polysiloxanen, welche quaternäre Ammoniumgruppen tragen, können die beschriebenen Nachteile zumindest teilweise überwinden. Die Herstellung von diquaternären Polysiloxanen wird beispielsweise in der US 4,891,166 beschrieben. Ihre Synthese erfolgt durch Umsetzung von Polysiloxanen, welche terminale Epoxidgruppen tragen, mit tertiären Aminen in solchen Mengenverhältnissen, dass jeder Epoxidgruppe mindestens eine tertiäre Aminogruppe entspricht. Die Reaktion wird in Gegenwart eines Säureäquivalents, bezogen auf die zu quaternierenden Stickstoffatome, bei erhöhter Temperatur durchgeführt. Die resultierenden diquaternären Polysiloxane besitzen aufgrund dieser besonderen Herstellungsweise ausschließlich terminal positionierte quaternäre Ammoniumgruppen. Die so hergestellten Verbindungen werden für die Anwendung in Haarbehandlungsmitteln und Kosmetika empfohlen.

Ammonium- und Polyether-modifizierte Polysiloxane werden in DE 10 2005 056 864 B4 beschrieben. Die Polysiloxane werden aus einem Epoxy-funktionellen Polysiloxan, das mit Aminen und Alkylalkoholalkoxylaten umgesetzt wird, hergestellt. Anschließend erfolgt eine Quaternierung mit einem Alkylierungsmittel. Die Polysiloxane werden zur Ausrüstung von textilen Substraten verwendet und zeichnen sich durch eine hohe thermische Vergilbungsresistenz aus. Aufgrund der endständigen Polyether- und Ammoniumgruppen besitzen sie auch eine gute pH-Stabilität.

Den genannten Vorteilen der quaternäre Ammoniumgruppen-tragenden Polysiloxane steht unter Praxisbedingungen jedoch der Nachteil gegenüber, dass sie oftmals eine mangelnde Resistenz gegenüber phenolischer Vergilbung, anionischen Textilhilfsmitteln und Salzzusatz sowie gegen Schereinwirkung, insbesondere in Jetverfahren, in Gegenwart von Anionen und Salzzusatz aufweisen.

In Jetfärbemaschinen wirken auf die Ausrüstungsmittel starke dynamische Belastungen durch hohe Scherkräfte, die die Behandlungsmittel destabilisieren, und - wie oben beschrieben - zu unerwünschter Fleckenbildung führen können.

Bei der weichmachenden Ausrüstung gefärbter oder optisch aufgehellter Ware in Jetfärbemaschinen, in denen die Ware bereits gefärbt oder optisch aufgehellt wurde, ist es einerseits wichtig, dass es nicht zu unerwünschten Abscheidungen aus der destabilisierten Weichgriff-Emulsion kommt, und andererseits, dass die jeweilige Färbung bzw. optische Aufhellung nicht beeinträchtigt wird.

Es besteht daher die Aufgabe, verbesserte Polysiloxane zur Weichgriffausrüstung bereitzustellen, die diesen Anforderungen gerecht werden und die die Nachteile des Standes der Technik überwinden. Insbesondere sollen Polysiloxane bereitgestellt werden, die eine hohe Emulsionsstabilität gegenüber Anionen, Salzen, pH-Änderungen und starken Scherkräften sowie Kombinationen dieser Einflussfaktoren aufweisen und resistent gegenüber thermischer und phenolischer Vergilbung sind.

Diese Aufgabe wird überraschenderweise durch die erfindungsgemäßen Polysiloxane gelöst, welche mit zwitterionischen Gruppen modifiziert sind.

Überraschenderweise hat sich gezeigt, dass die erfindungsgemäßen zwitterionischen Polysiloxane und Emulsionen daraus eine hohe Scherstabilität, insbesondere in Gegenwart von Salzen, Stabilität gegenüber Anionen und Resistenz gegenüber phenolischer Vergilbung aufweisen. Die erfindungsgemäßen Polysiloxane eignen sich nicht nur als Weichgriffmittel, sondern können auch Farben, Lasuren, Lacken und Autopflege-Produkten beispielsweise zur Verbesserung ihrer Benetzungs-, Spreitungs- und/oder Verlaufseigenschaften zugesetzt werden.

Ein erster Aspekt der Erfindung betrifft daher ein Polysiloxan der allgemeinen Formel A 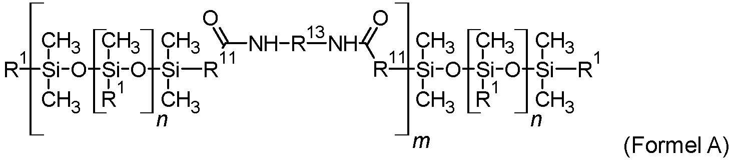 wobei
- R¹: unabhängig voneinander
Methyl, 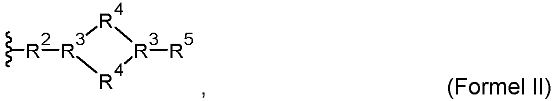 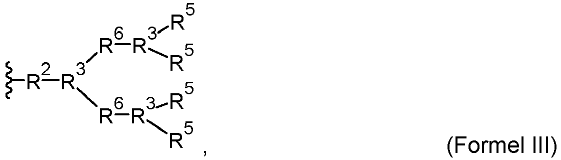 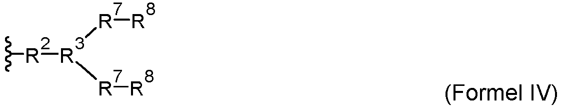 oder 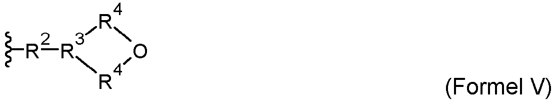 ist, mit der Maßgabe, dass in Formel A mindestens ein R¹ einer der Formeln II-V entspricht,
- R²: unabhängig voneinander 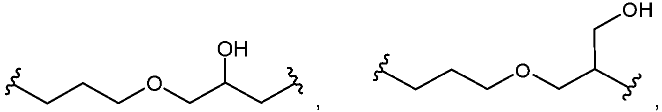 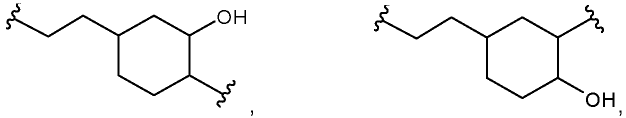 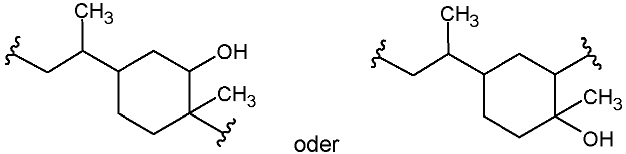 ist,
- R³: unabhängig voneinander 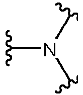 oder eine zwitterionische Gruppe ausgewählt aus 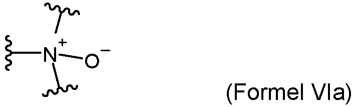 und 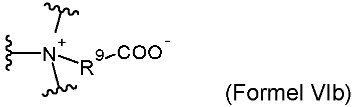 ist, mit der Maßgabe, dass mindestens ein R³ in Formel A eine zwitterionische Gruppe ist,
- R⁴: unabhängig voneinander ein unverzweigtes oder verzweigtes C₁₋₇-Alkylen, bevorzugt ein unverzweigtes C₁₋₅-Alkylen, besonders bevorzugt -(CH₂)₂- ist,
- R⁵: unabhängig voneinander ein verzweigtes oder unverzweigtes C₁₋₁₈-Alkyl, bevorzugt ein unverzweigtes C₁₋₈-Alkyl, besonders bevorzugt Methyl ist,
- R⁶: unabhängig voneinander ein unverzweigtes C₂₋₅-Alkylen, bevorzugt -(CH₂)₂- oder -(CH₂)₃-ist,
- R⁷: unabhängig voneinander ein unverzweigtes oder verzweigtes C₁₋₁₈-Alkylen, bevorzugt ein unverzweigtes C₁₋₈-Alkylen, besonders bevorzugt -(CH₂)₂- oder Methylen ist,
- R⁸: unabhängig voneinander H oder OH ist,
- R⁹: unabhängig voneinander ein unverzweigtes oder verzweigtes C₁₋₁₈-Alkylen, bevorzugt ein unverzweigtes C₁₋₈-Alkylen, besonders bevorzugt Methylen ist,
- R¹¹: unabhängig voneinander 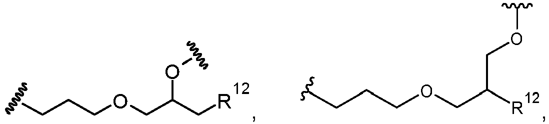 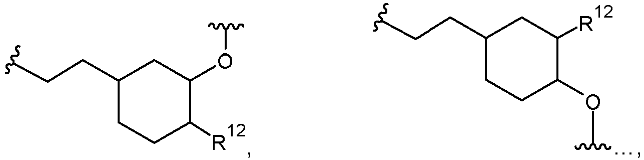 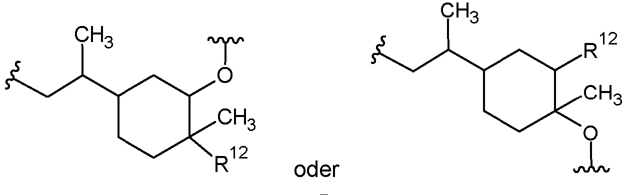 ist,
- R¹²: unabhängig voneinander 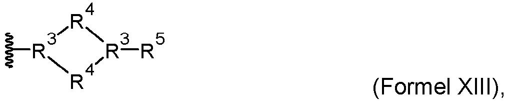 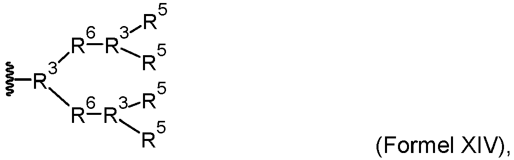 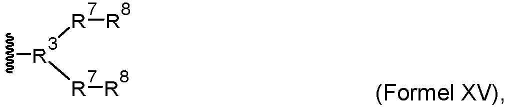 oder 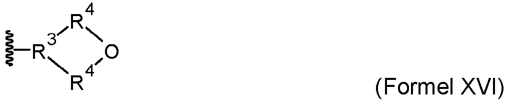 ist,
- R¹³: unabhängig voneinander ein aliphatisches oder cyclisches C₁₋₁₈-Alkylen oder Arylen ist, jeweils ggf. substituiert mit C₁₋₈-Alkyl oder Benzyl, bevorzugt unverzweigtes C₁₋₈-Alkylen, insbesondere -(CH₂)₄-, -(CH₂)₆-, 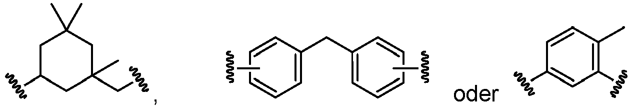 ist,
- n: eine ganze Zahl von 20-2000, bevorzugt 40-1000, besonders bevorzugt 40-180 ist, und
- m: 0 oder eine ganze Zahl größer 0, bevorzugt 0 oder 1-2000, besonders bevorzugt 0 oder 1-55 ist.

Bevorzugt sind im erfindungsgemäßen Polysiloxan 0-99,9%, stärker bevorzugt 50-99,9%, noch stärker bevorzugt 80-99,9% und besonders bevorzugt 90-99,9% der R¹-Substituenten Methyl.

Alternativ sind bevorzugt im erfindungsgemäßen Polysiloxan 0-99,999%, stärker bevorzugt 50-99,999%, noch stärker bevorzugt 80-99,999% und besonders bevorzugt 90-99,999% der R¹-Substituenten Methyl.

Die zwitterionischen Ausführungsformen des R¹-Substituenten gemäß Formeln II-V können im erfindungsgemäßen Polysiloxan terminal und/oder lateral auf dem Polysiloxanrückgrat positioniert sein.

In einer bevorzugten Ausführungsform sind im erfindungsgemäßen Polysiloxan die beiden endständigen R¹-Substituenten Methyl und mindestens ein lateraler R¹-Substituent entspricht einer der Formeln II-V.

In einer alternativen Ausführungsform sind im erfindungsgemäßen Polysiloxan alle lateralen R¹-Substituenten Methyl und die beiden endständigen R¹-Substituenten sind ausgewählt aus den Formeln II-V.

In einer bevorzugten Ausführungsform sind alle R¹-Substituenten des erfindungsgemäßen Polysiloxans ausgewählt aus Methyl und den Formeln II, III und V.

In einer bevorzugten Ausführungsform sind alle R¹-Substituenten des erfindungsgemäßen Polysiloxans ausgewählt aus Methyl und Formel II.

In einer alternativen Ausführungsform sind alle R¹-Substituenten des erfindungsgemäßen Polysiloxans ausgewählt aus Methyl und Formel III.

Entspricht mindestens ein R¹-Substituent im erfindungsgemäßen Polysiloxan der Formel IV, so ist R⁸ bevorzugt OH.

Entspricht mindestens ein R¹²-Substituent im erfindungsgemäßen Polysiloxan der Formel XV, so ist R⁸ bevorzugt OH.

Es ist bevorzugt, dass 10-100%, stärker bevorzugt 40-99,9%, besonders bevorzugt 50-95% und am meisten bevorzugt 60-80% von R³ im erfindungsgemäßen Polysiloxan als zwitterionische Gruppen vorliegen. Es hat sich überraschend gezeigt, dass erfindungsgemäße Polysiloxane bereits eine verbesserte Prozessstabilität gegenüber Polysiloxanen ohne zwitterionische Gruppen aufweisen, wenn mindestens 10% der R³-Substituenten als zwitterionische Gruppe vorliegen. Eine noch bessere Emulsionsstabilität in der Anwendung insbesondere gegenüber Scherkräften, insbesondere in Gegenwart von Salzen, gegenüber Anionen und Resistenz gegenüber phenolischer Vergilbung wird erreicht, wenn 50-100%, bevorzugt 60-100% der R³-Substituenten als zwitterionische Gruppen vorliegen.

In einer bevorzugten Ausführungsform liegen alle zwitterionischen Gruppen im erfindungsgemäßen Polysiloxan als Formel Vla vor.

In einer alternativen Ausführungsform liegen alle zwitterionischen Gruppen im erfindungsgemäßen Polysiloxan als Formel VIb vor.

Bevorzugt entspricht R² im erfindungsgemäßen Polysiloxan den Formeln

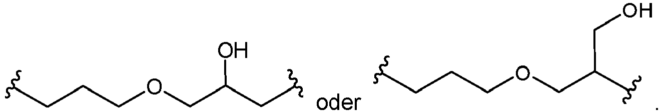

In einer bevorzugten Ausführungsform ist im Polysiloxan der Formel A
- R¹: unabhängig voneinander
Methyl, 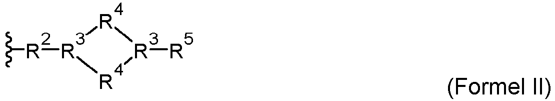 oder 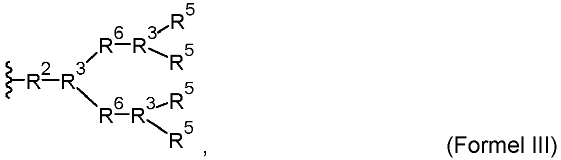 mit der Maßgabe, dass in Formel A mindestens ein R¹ einer der Formeln II-III entspricht,
- R²: unabhängig voneinander 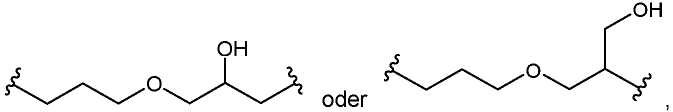 und
- R³: unabhängig voneinander 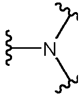 oder eine zwitterionische Gruppe ausgewählt aus 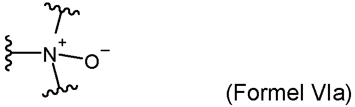 und 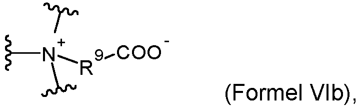 mit der Maßgabe, dass mindestens ein R³ in Formel A eine zwitterionische Gruppe ist,
- R¹¹: unabhängig voneinander 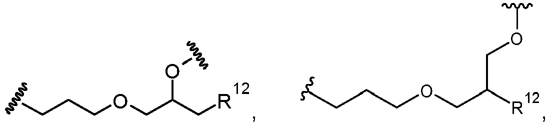
- R¹²: unabhängig voneinander 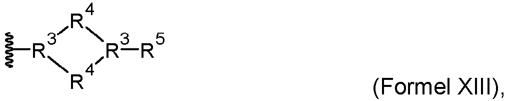 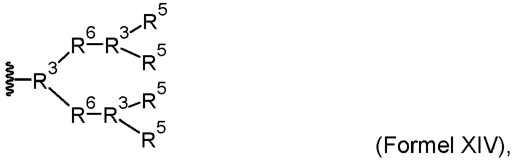
R⁴, R⁵, R⁶, R⁹, R¹³, m und n sind wie oben definiert.

In einer bevorzugten Ausführungsform sind im Wesentlichen alle lateralen R¹-Substituenten Methyl, insbesondere 90-99,999 % der R¹ Substituenten Methyl, wenn m größer 0 ist.

In einer bevorzugten Ausführungsform ist m = 0, d.h. das Polysiloxan entspricht der Formel I 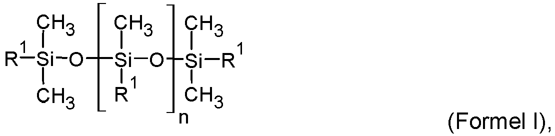 wobei
- R¹: unabhängig voneinander
Methyl, 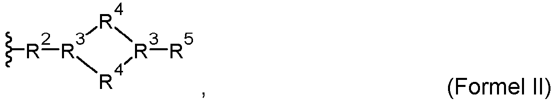 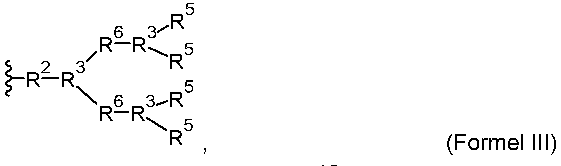 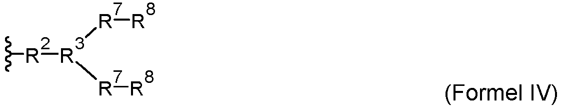 oder 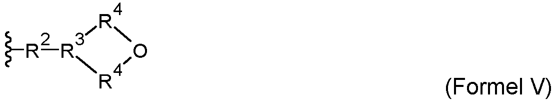 ist, mit der Maßgabe, dass in Formel I mindestens ein R¹ einer der Formeln II-V entspricht,
- R²: unabhängig voneinander 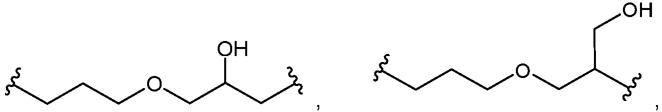 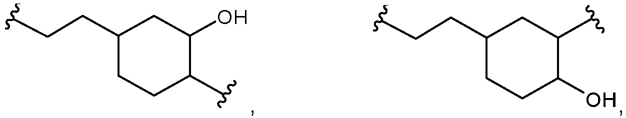 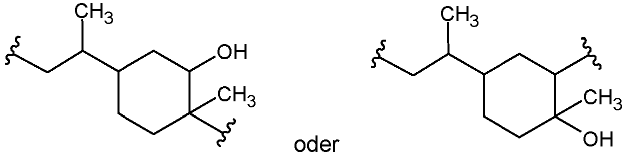 ist,
- R³: unabhängig voneinander 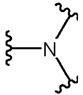 oder eine zwitterionische Gruppe ausgewählt aus 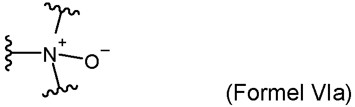 und 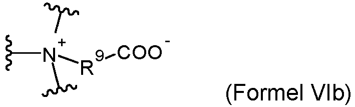 ist, mit der Maßgabe, dass mindestens ein R³ in Formel I eine zwitterionische Gruppe ist,
- R⁴: unabhängig voneinander ein unverzweigtes oder verzweigtes C₁₋₇-Alkylen, bevorzugt ein unverzweigtes C₁₋₅-Alkylen, besonders bevorzugt -(CH₂)₂- ist,
- R⁵: unabhängig voneinander ein verzweigtes oder unverzweigtes C₁₋₁₈-Alkyl, bevorzugt ein unverzweigtes C₁₋₈-Alkyl, besonders bevorzugt Methyl ist,
- R⁶: unabhängig voneinander ein unverzweigtes C₂₋₅-Alkylen, bevorzugt -(CH₂)₂- oder -(CH₂)₃-ist,
- R⁷: unabhängig voneinander ein unverzweigtes oder verzweigtes C₁₋₁₈-Alkylen, bevorzugt ein unverzweigtes C₁₋₈-Alkylen, besonders bevorzugt -(CH₂)₂- oder Methylen ist,
- R⁸: unabhängig voneinander H oder OH ist,
- R⁹: unabhängig voneinander ein unverzweigtes oder verzweigtes C₁₋₁₈-Alkylen, bevorzugt ein unverzweigtes C₁₋₈-Alkylen, besonders bevorzugt Methylen ist, und
- n: eine ganze Zahl von 20-2000, bevorzugt 40-1000, besonders bevorzugt 40-180 ist.

Bevorzugt sind im erfindungsgemäßen Polysiloxan 0-99,9%, stärker bevorzugt 50-99,9%, noch stärker bevorzugt 80-99,9% und besonders bevorzugt 90-99,9% der R¹-Substituenten Methyl.

Die zwitterionischen Ausführungsformen des R¹-Substituenten gemäß Formeln II-V können im erfindungsgemäßen Polysiloxan terminal und/oder lateral auf dem Polysiloxanrückgrat positioniert sein.

In einer bevorzugten Ausführungsform sind im erfindungsgemäßen Polysiloxan die beiden endständigen R¹-Substituenten Methyl und mindestens ein lateraler R¹-Substituent entspricht einer der Formeln II-V.

In einer alternativen Ausführungsform sind im erfindungsgemäßen Polysiloxan alle lateralen R¹-Substituenten Methyl und die beiden endständigen R¹-Substituenten sind ausgewählt aus den Formeln II-V.

In einer bevorzugten Ausführungsform sind alle R¹-Substituenten des erfindungsgemäßen Polysiloxans ausgewählt aus Methyl und den Formeln II, III und V.

In einer bevorzugten Ausführungsform sind alle R¹-Substituenten des erfindungsgemäßen Polysiloxans ausgewählt aus Methyl und Formel II.

In einer alternativen Ausführungsform sind alle R¹-Substituenten des erfindungsgemäßen Polysiloxans ausgewählt aus Methyl und Formel III.

Entspricht mindestens ein R¹-Substituent im erfindungsgemäßen Polysiloxan der Formel IV, so ist R⁸ bevorzugt OH.

Es ist bevorzugt, dass 10-100%, stärker bevorzugt 40-99,9%, besonders bevorzugt 50-95% und am meisten bevorzugt 60-80% von R³ im erfindungsgemäßen Polysiloxan als zwitterionische Gruppen vorliegen. Es hat sich überraschend gezeigt, dass erfindungsgemäße Polysiloxane bereits eine verbesserte Prozessstabilität gegenüber Polysiloxanen ohne zwitterionische Gruppen aufweisen, wenn mindestens 10% der R³-Substituenten als zwitterionische Gruppe vorliegen. Eine noch bessere Emulsionsstabilität in der Anwendung insbesondere gegenüber Scherkräften, insbesondere in Gegenwart von Salzen, gegenüber Anionen und Resistenz gegenüber phenolischer Vergilbung wird erreicht, wenn 50-100%, bevorzugt 60-100% der R³-Substituenten als zwitterionische Gruppen vorliegen.

In einer bevorzugten Ausführungsform liegen alle zwitterionischen Gruppen im erfindungsgemäßen Polysiloxan als Formel Vla vor.

In einer alternativen Ausführungsform liegen alle zwitterionischen Gruppen im erfindungsgemäßen Polysiloxan als Formel VIb vor.

Bevorzugt entspricht R² im erfindungsgemäßen Polysiloxan den Formeln

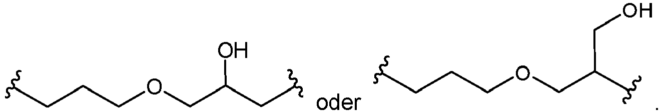

In einer bevorzugten Ausführungsform ist im Polysiloxan der Formel I
- R¹: unabhängig voneinander
Methyl, 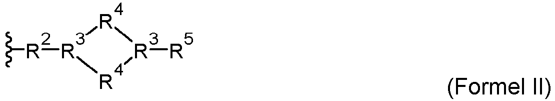 oder 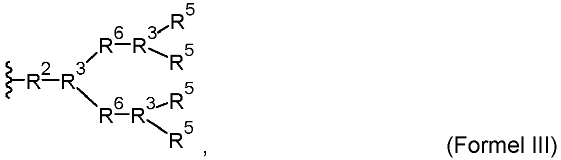 mit der Maßgabe, dass in Formel I mindestens ein R¹ einer der Formeln II-III entspricht,
- R²: unabhängig voneinander 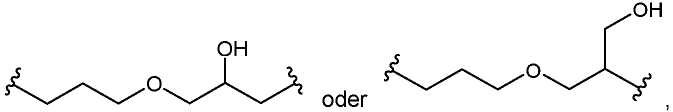 und
- R³: unabhängig voneinander 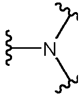 oder eine zwitterionische Gruppe ausgewählt aus 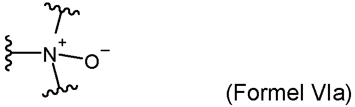 und 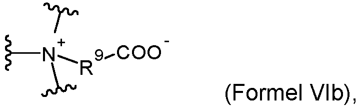 mit der Maßgabe, dass mindestens ein R³ in Formel I eine zwitterionische Gruppe ist.

R⁴, R⁵, R⁶, R⁹ und n sind wie oben definiert.

Ein weiterer Aspekt der Erfindung umfasst ein Verfahren zur Herstellung von erfindungsgemäßen Polysiloxanen, umfassend
(a) Bereitstellen eines Polysiloxans der allgemeinen Formel VII 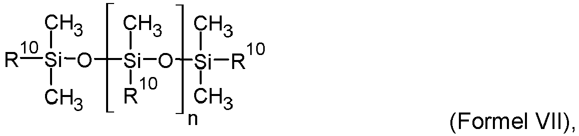 worin
   - R¹⁰: unabhängig voneinander
   Methyl, 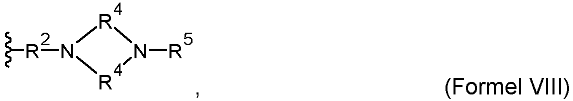 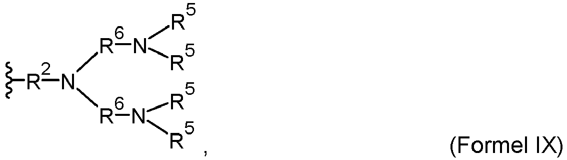 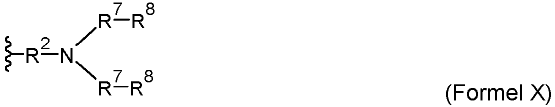 oder 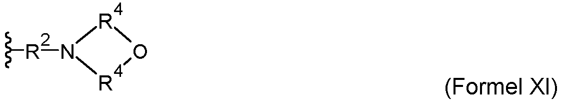 ist, mit der Maßgabe, dass in Formel VII mindestens ein R¹⁰ einer der Formeln VIII-XI entspricht,
(b) ggf. Umsetzen des Polysiloxans der allgemeinen Formel VII mit einem Diisocyanat der Formel OCN-R¹³-NCO, und
(c) Umsetzen des Polysiloxans der Formel VII oder des nach Schritt (b) erhaltenen Polysiloxanaddukts mit einem Reaktanden ausgewählt aus einem Peroxid und/oder einer Verbindung der allgemeinen Formel XII 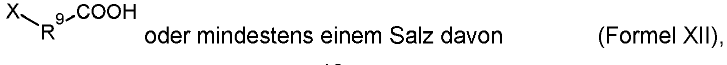 wobei X ein Halogen, insbesondere Cl oder Br ist,
und wobei das Peroxid bevorzugt Wasserstoffperoxid (H₂O₂), Di-tert-Butylperoxid, *tert-*Butylhydroperoxid, tert-Butylperoxybenzoat, meta-Chlorperbenzoesäure, Dibenzoylperoxid, Diacetylperoxid, Peroxyessigsäure, Dicumylperoxid, Cumolhydroperoxid, Methyl-ethyl-ketonperoxid, Natriumperoxid und/oder Bariumperoxid und besonders bevorzugt Wasserstoffperoxid (H₂O₂) ist.

R², R⁴, R⁵, R⁶, R⁷, R⁸, R⁹, R¹³, n und m sind wie oben definiert.

Bevorzugt ist in Schritt b) des erfindungsgemäßen Verfahrens das molare Verhältnis von Diisocyanat der allgemeinen Formel OCN-R¹³-NCO zum Polysiloxan der allgemeinen Formel VII von 0,1:1-1:1, stärker bevorzugt von 0,4:1-0,999:1, besonders bevorzugt von 0,5:1-0,95:1 und am meisten bevorzugt von 0,6:1-0,9:1.

Bevorzugt ist in Schritt b) des erfindungsgemäßen Verfahrens das molare Verhältnis der Isocyanatgruppen des Diisocyanats der allgemeinen Formel OCN-R¹³-NCO zu den Isocyanat-reaktiven Hydroxy-Gruppen des Polysiloxans der allgemeinen Formel VII von 0,1:1-1:1, stärker bevorzugt von 0,4:1-0,999:1, besonders bevorzugt von 0,5:1-0,95:1 und am meisten bevorzugt von 0,6:1-0,9:1.

Bevorzugt ist in Schritt b) das Diisocyanat der allgemeinen Formel OCN-R¹³-NCO ausgewählt aus der Gruppe bestehend aus Toluol-2,4-diisocyanat, 2,4'-Diphenylmethandiisocyanat, 4,4'-Diphenylmethandiisocyanat (MDI), höherkettige Homologe des Diphenylmethandiisocyanates (Polymer-MDI), Tetramethylen-diisocyanat, Hexamethylendiisocyanat und/oder Isophorondiisocyanat.

Bevorzugt wird Schritt b) unter Verwendung eines Lösungsmittels oder in Abwesenheit eines Lösungsmittels durchgeführt, stärker bevorzugt in Abwesenheit eines Lösungsmittels.

Bevorzugt wird Schritt b) unter Verwendung eines Katalysators, insbesondere auf Basis eines tertiären Amins, einer Bismuth-Verbindung und/oder einer zinnorganischen Verbindung durchgeführt.

Bevorzugt kann der Reaktionsverlauf in Schritt b) titrimetrisch oder mit IR-Spektroskopie überwacht werden.

Wird in Schritt c) als Reaktand ein Salz einer Halogencarbonsäure gemäß Formel XII eingesetzt, so ist das Salz bevorzugt das Ammonium- oder Natriumsalz der Halogencarbonsäure.

Bevorzugt wird im erfindungsgemäßen Verfahren der Reaktand in einer solchen Menge eingesetzt, dass das molare Verhältnis zwischen dem Reaktanden und den tertiären Aminogruppen im Polysiloxan der Formel VII oder im nach Schritt (b) erhaltenen Polysiloxanaddukt dem gewünschten Umsetzungsgrad der Aminogruppen zu zwitterionischen Gruppen entspricht. Bevorzugt ist dabei ein molares Verhältnis zwischen Reaktand und den tertiären Aminogruppen im Polysiloxan der Formel VII von 0,1:1-1:1, stärker bevorzugt 0,4:1-0,999:1, besonders bevorzugt 0,5:1-0,95:1 und am meisten bevorzugt 0,6:1-0,8:1.

Bevorzugt wird die Reaktion in Schritt b) und/oder Schritt c) des erfindungsgemäßen Verfahrens bei 15-150 °C, stärker bevorzugt bei 20-105 °C, noch stärker bevorzugt bei 25-95 °C, noch stärker bevorzugt bei 40-90 °C und besonders bevorzugt bei 70-85 °C durchgeführt.

Schritt c) des erfindungsgemäßen Verfahrens wird bevorzugt in einem Lösungsmittel durchgeführt, welches besonders bevorzugt Wasser und/oder mindestens ein organisches Lösungsmittel umfasst. Dabei können organische Lösungsmittel bevorzugt aus der Gruppe der mono- und polyfunktionellen Alkohole, z.B. Ethanol, 1-Propanol, 2-Propanol, Butanol, 2-Methyl-2-propanol, 3-Methyl-1-butanol und 2-Hexyl-1-decanol und/oder deren Etherverbindungen, z.B. Ethylenglycolmonomethylether, Diethylenglykoldimethylether, Diethylenglykol, Dipropylenglykol-n-butylether, Propylenglykolmonobutylether, Propylenglykol-n-butylether, Dipropylenglykolmonomethylether, Dipropylenglycoldimethylether, Hexylenglykol, Butylglykol, Butyldiglykol, Triethylenglycoldimethylether, und/oder Ketonen, z.B. Aceton, eingesetzt werden. Bevorzugt ist das Lösungsmittel Wasser und/oder ein organisches Lösungsmittel.

Gegebenenfalls können dem Verfahren weitere Schritte angeschlossen werden, wie zum Beispiel Destillation und/oder Filtration.

Die Herstellung der aminofunktionellen Polysiloxane der Formel VII, welche beim erfindungsgemäßen Verfahren als Ausgangsverbindungen dienen, erfolgt nach Methoden, welche dem Fachmann bekannt sind. So können in einem ersten Schritt epoxyfunktionelle Polysiloxane durch Hydrosilylierung Si-H-haltiger Polysiloxane mit α,β-ungesättigten Epoxidverbindungen gewonnen werden. Ein entsprechendes Verfahren wird beispielsweise in DE 37 05 121 A1 beschrieben.

Im zweiten Schritt wird die Epoxidgruppe mit jeweils einem sekundären Amin zu Polysiloxanen der Formel VII umgesetzt. Ein entsprechendes Verfahren ist beispielsweise in WO 02/10256 A1 beschrieben. Gegebenenfalls kann sich eine Equilibrierung zum Beispiel mit Octamethylcyclotetrasiloxan anschließen.

In einem weiteren Aspekt betrifft die Erfindung ein Polysiloxan erhältlich durch das oben beschriebene erfindungsgemäße Verfahren.

In einer bevorzugten Ausführungsform betrifft die Erfindung ein Verfahren zur Herstellung von erfindungsgemäßen Polysiloxanen, wobei ein Polysiloxan der allgemeinen Formel VII 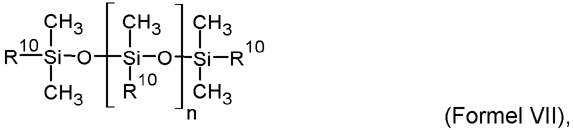 worin
- R¹⁰: unabhängig voneinander
Methyl, 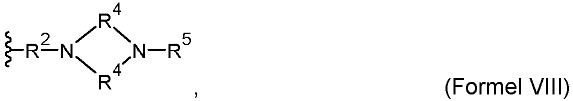 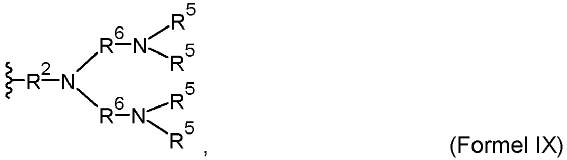 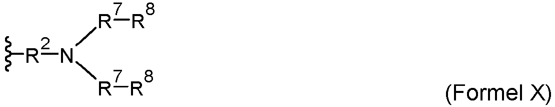 oder 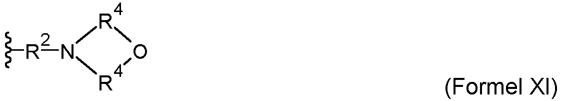 ist, mit der Maßgabe, dass in Formel VII mindestens ein R¹⁰ einer der Formeln VIII-XI entspricht,

mit einem Reaktanden ausgewählt aus einem Peroxid und/oder einer Verbindung der allgemeinen Formel XII 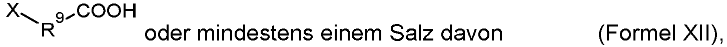
wobei X ein Halogen, insbesondere Cl oder Br ist,
und wobei das Peroxid bevorzugt Wasserstoffperoxid (H₂O₂), Di-*tert*-Butylperoxid, *tert-*Butylhydroperoxid, *tert*-Butylperoxybenzoat, *meta*-Chlorperbenzoesäure, Dibenzoylperoxid, Diacetylperoxid, Peroxyessigsäure, Dicumylperoxid, Cumolhydroperoxid, Methyl-ethyl-ketonperoxid, Natriumperoxid und/oder Bariumperoxid und besonders bevorzugt Wasserstoffperoxid (H₂O₂) ist,
umgesetzt wird.

R², R⁴, R⁵, R⁶, R⁷, R⁸, R⁹ und n sind wie oben definiert.

Wird als Reaktand ein Salz einer Halogencarbonsäure gemäß Formel XII eingesetzt, so ist das Salz bevorzugt das Ammonium- oder Natriumsalz der Halogencarbonsäure.

Bevorzugt wird im erfindungsgemäßen Verfahren der Reaktand in einer solchen Menge eingesetzt, dass das molare Verhältnis zwischen dem Reaktanden und den tertiären Aminogruppen im Polysiloxan der Formel VII dem gewünschten Umsetzungsgrad der Aminogruppen zu zwitterionischen Gruppen entspricht. Bevorzugt ist dabei ein molares Verhältnis zwischen Reaktand und den tertiären Aminogruppen im Polysiloxan der Formel VII von 0,1:1-1:1, stärker bevorzugt 0,4:1-0,999:1, besonders bevorzugt 0,5:1-0,95:1 und am meisten bevorzugt 0,6:1-0,8:1.

Bevorzugt wird im erfindungsgemäßen Verfahren die Reaktion bei 15-150 °C, stärker bevorzugt bei 20-105 °C, noch stärker bevorzugt bei 25-95 °C und besonders bevorzugt bei 70-85 °C durchgeführt.

Das erfindungsgemäße Verfahren wird bevorzugt in einem Lösungsmittel durchgeführt, welches besonders bevorzugt Wasser und/oder mindestens ein organisches Lösungsmittel umfasst. Dabei können organische Lösungsmittel bevorzugt aus der Gruppe der mono- und polyfunktionellen Alkohole, z.B. Ethanol, 1-Propanol, 2-Propanol, Butanol, 2-Methyl-2-propanol, 3-Methyl-1-butanol und 2-Hexyl-1-decanol und/oder deren Etherverbindungen, z.B. Ethylenglycolmonomethylether, Diethylenglykoldimethylether, Diethylenglykol, Dipropylenglykol-n-butylether, Propylenglykolmonobutylether, Propylenglykol-n-butylether, Dipropylenglykolmonomethylether, Dipropylenglycoldimethylether, Hexylenglykol, Butylglykol, Butyldiglykol, Triethylenglycoldimethylether, und/oder Ketonen, z.B. Aceton, eingesetzt werden. Bevorzugt ist das Lösungsmittel Wasser und/oder ein organisches Lösungsmittel. Gegebenenfalls können dem Verfahren weitere Schritte angeschlossen werden, wie zum Beispiel Destillation und/oder Filtration.

Die Herstellung der aminofunktionellen Polysiloxane der Formel VII, welche beim erfindungsgemäßen Verfahren als Ausgangsverbindungen dienen, erfolgt nach Methoden, welche dem Fachmann bekannt sind. So können in einem ersten Schritt epoxyfunktionelle Polysiloxane durch Hydrosilylierung Si-H-haltiger Polysiloxane mit α,β-ungesättigten Epoxidverbindungen gewonnen werden. Ein entsprechendes Verfahren wird beispielsweise in DE 37 05 121 A1 beschrieben.

Im zweiten Schritt wird die Epoxidgruppe mit jeweils einem sekundären Amin zu Polysiloxanen der Formel VII umgesetzt. Ein entsprechendes Verfahren ist beispielsweise in WO 02/10256 A1 beschrieben. Gegebenenfalls kann sich eine Equilibrierung zum Beispiel mit Octamethylcyclotetrasiloxan anschließen.

In einem weiteren Aspekt betrifft die Erfindung ein Polysiloxan erhältlich durch das oben beschriebene erfindungsgemäße Verfahren.

Ein weiterer Aspekt der Erfindung betrifft eine Zusammensetzung umfassend
(i) mindestens ein erfindungsgemäßes Polysiloxan und
(ii) ein Lösungsmittel, insbesondere Wasser und/oder ein organisches Lösungsmittel, stärker bevorzugt Wasser.

Bevorzugt enthält die erfindungsgemäße Zusammensetzung bezogen auf ihre Gesamtmasse 0,005-99,9 Gew.%, stärker bevorzugt 5-99 Gew.%, besonders bevorzugt 10-90 Gew.% der Komponente (i).

In einer bevorzugten Ausführungsform umfasst die erfindungsgemäße Zusammensetzung ferner (iii) mindestens einen Emulgator. Der Emulgator kann dabei anionisch, kationisch, nichtionisch oder amphoter sein, es können auch Mischungen solcher Emulgatoren eingesetzt werden.

Bevorzugt enthält die erfindungsgemäße Zusammensetzung mindestens einen nichtionischen Emulgator, besonders bevorzugt Ethoxylierungsprodukte aliphatischer Alkohole. Solche Ethoxylierungsprodukte aliphatischer Alkohole können in Reinform oder als Mischung in der erfindungsgemäßen Zusammensetzung enthalten sein. Vorteilhaft sind beispielsweise Ethoxylierungsprodukte aliphatischer C₆₋₂₂ Alkohole und insbesondere aliphatischer C₈₋₁₈ Alkohole, welche gesättigt, linear oder vorzugsweise verzweigt sein können und welche bis zu 50 Ethylenoxideinheiten angelagert enthalten. Besonders vorteilhaft sind beispielsweise Ethoxylierungsprodukte von Isodecylalkohol, Isotridecylalkohol oder C₁₆₋₁₈-Alkohole mit jeweils 2-50 und insbesondere 5-25 angelagerten Ethylenoxideinheiten pro Molekül.

Neben reinen Ethoxylierungsprodukten eignen sich auch Alkohole der erwähnten Zusammensetzung, deren Alkylenoxidrest aus Ethylenoxid und 1,2-Propylenoxid in statistischer oder in blockartiger Verteilung aufgebaut ist.

Bevorzugt enthält die erfindungsgemäße Zusammensetzung bezogen auf die Komponente (i) 2-100 Gew.%, stärker bevorzugt 10-80 Gew.%, besonders bevorzugt 20-70 Gew.% eines Emulgators (iii) oder einer Mischung an Emulgatoren.

Falls das Lösungsmittel (ii) der erfindungsgemäßen Zusammensetzung ein organisches Lösungsmittel enthält, so ist dieses bevorzugt polar oder unpolar. Stärker bevorzugt sind organische Lösungsmittel ausgewählt aus der Gruppe der mono- und polyfunktionellen Alkohole, z.B. Ethanol, 1-Propanol, 2-Propanol, Butanol, 2-Methyl-2-propanol, 3-Methyl-1-butanol und 2-Hexyl-1-decanol und/oder deren Etherverbindungen, z.B. Ethylenglycolmonomethylether, Diethylenglykoldimethylether, Diethylenglykol, Dipropylenglykol-n-butylether, Propylenglykolmonobutylether, Propylenglykol-n-butylether, Dipropylenglykolmonomethylether, Dipropylenglycoldimethylether, Hexylenglykol, Butylglykol, Butyldiglykol, Triethylenglycoldimethylether, und/oder deren Esterverbindungen, z.B. Ethylacetat, n-Propylacetat, Isopropylacetat, n-Butylacetat, Isobutylacetat, 1-Methoxy-2-propylacetat, dibasischen Estern oder Amylacetat und/oder Ketonen, z.B. Aceton, Methylethylketon, Methylpropylketon, und/oder gesättigten Kohlenwasserstoffen, insbesondere Benzin mit 5 bis 10 Kohlenstoffatomen, stärker bevorzugt Benzin mit 6 bis 8 Kohlenstoffatomen, wie z.B. Benzin, Hexan, Heptan, Oktan, Cyclohexan sowie Cycloheptan, insbesondere n-Pentan, n-Hexan, n-Heptan oder n-Oktan, Isoparaffin oder Petrolether. Bevorzugt ist das Lösungsmittel Wasser und/oder ein organisches Lösungsmittel. Eine erfindungsgemäße Zusammensetzung kann auch eine Mischung polarer und apolarer Lösungsmittel enthalten.

In einer bevorzugten Ausführungsform umfasst die erfindungsgemäße Zusammensetzung ferner (iv) mindestens ein Additiv, beispielsweise einen Verflüssiger, z.B. ein Polyethylenglykol mit einem Molekulargewicht von 200-10000 g/mol und bevorzugt 400-6000 g/mol, und/oder Glycerin und/oder Harnstoff und/oder mindestens eine Säure, insbesondere eine organische Säure wie Essig- oder Milchsäure. Durch Protonieren eventuell vorhandener tertiärer Aminogruppen im Polysiloxan kann die Stabilität der Zusammensetzung weiter verbessert werden.

In einer besonders bevorzugten Ausführungsform umfasst die erfindungsgemäße Zusammensetzung (i) mindestens ein erfindungsgemäßes Polysiloxan, (ii) ein Lösungsmittel, insbesondere Wasser und (iii) mindestens einen Emulgator.

In diesem Fall ist die erfindungsgemäße Zusammensetzung bevorzugt eine Emulsion, insbesondere eine o/w Emulsion, oder eine Flotte, insbesondere eine wässrige Flotte. Die Herstellung erfindungsgemäßer Emulsionen erfolgt nach Methoden, die dem Fachmann bekannt sind, z.B. bei Temperaturen zwischen 15 und 70 °C.

Die Emulsion umfasst bezogen auf ihre Gesamtmasse bevorzugt 5-60 Gew.% und besonders bevorzugt 10-40 Gew.% der Komponente (i). Die Flotte enthält bezogen auf ihre Gesamtmasse bevorzugt 0,005-3,0 Gew.%, besonders bevorzugt 0,01-1,2 Gew.% der Komponente (i).

In einer besonders bevorzugten Ausführungsform umfasst die erfindungsgemäße Zusammensetzung (i) mindestens ein erfindungsgemäßes Polysiloxan, (ii) ein Lösungsmittel, insbesondere Wasser, und (iv) mindestens ein Additiv, insbesondere eine Säure.

In einer besonders bevorzugten Ausführungsform umfasst die erfindungsgemäße Zusammensetzung (i) mindestens ein erfindungsgemäßes Polysiloxan, (ii) ein Lösungsmittel, insbesondere Wasser, (iii) mindestens einen Emulgator und (iv) mindestens ein Additiv, insbesondere eine Säure.

In einer weiteren bevorzugten Ausführungsform umfasst die erfindungsgemäße Zusammensetzung (i) mindestens ein erfindungsgemäßes Polysiloxan, (ii) ein Lösungsmittel, insbesondere Wasser, (iii) mindestens einen Emulgator und (iv) mindestens ein Additiv, insbesondere eine Säure und/oder mindestens ein Weichgriffmittel, bevorzugt ein organomodifiziertes Polysiloxan.

Geeignete Weichgriffmittel sind zum Beispiel Polysiloxane mit Amino-, Quat-, Polyether- und/oder (Poly-)Urethan-Gruppen und Kombinationen davon.

Das organomodifizierte Polysiloxan ist zu dem Polysiloxan gemäß Formel A unterschiedlich.

Es hat sich überraschend gezeigt, dass die genannten Zusammensetzungen und insbesondere Emulsionen besonders stabil gegenüber Scherkräften, insbesondere in Gegenwart von Salzen, und gegenüber Anionen sind, und Resistenz gegenüber phenolischer Vergilbung aufweisen. Dies erleichtert eine homogene Behandlung von Substraten und insbesondere eine homogene Ausrüstung von Textilien mit diesen Zusammensetzungen. Die hohe Prozessstabilität stellt insbesondere bei der Ausrüstung im Jetverfahren einen großen Vorteil dar, da hier hohe Scherkräfte oft zusätzlich zu den anderen genannten Faktoren wirken und dies stark destabilisierend auf Emulsionen wirken kann.

Ohne an eine Theorie gebunden zu sein, wird angenommen, dass die zwitterionischen Gruppen in den erfindungsgemäßen Polysiloxanen maßgeblich zur Stabilisierung gegenüber diesen Einflüssen beitragen.

Ein weiterer Aspekt der Erfindung betrifft die Verwendung erfindungsgemäßer Polysiloxane oder einer erfindungsgemäßen Zusammensetzung zur Behandlung eines Substrats oder als Additiv in Farb-, Lasur-, Lack- und/oder Autopflege-Formulierungen. Bevorzugte Substrate für die erfindungsgemäße Verwendung sind Textil, Leder, Metall, Glas, Holz oder Kunststoff.

In einer bevorzugten Ausführungsform ist die erfindungsgemäße Zusammensetzung ein Additiv für eine Farb-, Lasur-, Lack- und/oder Autopflege-Formulierung umfassend mindestens ein erfindungsgemäßes Polysiloxan (i) und ein organisches Lösungsmittel. In diesem Fall enthält die Zusammensetzung bezogen auf ihre Gesamtmasse bevorzugt 0,1-99,9 Gew.%, besonders bevorzugt 0,5-99 Gew.% und am meisten bevorzugt 10-90 Gew.% der Komponente (i).

In Autopflege- und Lackzusammensetzungen kann die Komponente (i) bezogen auf die Gesamtmasse zu 0,1-5 Gew.% enthalten sein.

Bevorzugt ist die erfindungsgemäße Verwendung zur Ausrüstung eines textilen Substrats. Insbesondere kann das textile Substrat ein Gewebe, Gewirk, Vlies, Faser und/oder Leder oder ein gemischtes Erzeugnis daraus sein. Erfindungsgemäß kann das textile Substrat natürliche Fasern, insbesondere Baumwolle und/oder Wolle, und/oder synthetische Fasern, insbesondere Viskose, Polyester, Polyamid und/oder Polyacrylnitril enthalten.

Zur Ausrüstung eines textilen Substrats werden bevorzugt Emulsionen oder wässrige Verdünnungen dieser Emulsionen, auch Flotte genannt, verwendet.

Es hat sich überraschend gezeigt, dass die erfindungsgemäßen Polysiloxane beim Behandeln von Substraten unter allen Bedingungen eine homogene Auftragung ermöglichen. Dank der hohen Emulsionsstabilität ist eine gleichmäßige Ausrüstung der Substrate sogar unter Bedingungen möglich, die sonst destabilisierend auf Emulsionen wirken, beispielsweise bei hohen pH-Werten, in Gegenwart von Salzen, in Gegenwart von Anionen und/oder unter starken Scherkräften.

In einer bevorzugten Ausführungsform kann das erfindungsgemäße Polysiloxan oder die erfindungsgemäße Zusammensetzung zur Verbesserung des Weichgriffs des textilen Substrats eingesetzt werden. Es hat sich überraschend gezeigt, dass die Ausrüstung mit erfindungsgemäßen Polysiloxanen einen hervorragenden Weichgriff in behandelten Textilien erzeugt und dabei die Hydrophilie nicht beeinträchtigt. Außerdem konnte gezeigt werden, dass die so behandelte Ware stabil ist gegenüber thermischer und/oder phenolischer Vergilbung. Ein besonderer Vorteil ergibt sich bei der erfindungsgemäßen Verwendung zur Ausrüstung von gefärbter oder optisch aufgehellter Ware. Dabei kann die Ausrüstung auch in den gleichen Jetfärbemaschinen erfolgen, in denen die Ware gefärbt oder optisch aufgehellt wurde. Es hat sich überraschend gezeigt, dass durch die Ausrüstung mit erfindungsgemäßen Polysiloxanen oder erfindungsgemäßen Zusammensetzungen die jeweilige Färbung oder optische Aufhellung nicht beeinträchtigt und gleichzeitig der Weichgriff der Ware deutlich verbessert wird.

In einer weiteren bevorzugten Ausführungsform kann das erfindungsgemäße Polysiloxan oder die erfindungsgemäße Zusammensetzung zur Verbesserung der Benetzungs-, Spreitungs- und/oder Verlaufseigenschaften und/oder des Schaumverhaltens von Farb-, Lasur-, Lack- und/oder Autopflege-Formulierungen eingesetzt werden. Durch Verwendung des erfindungsgemäßen Polysiloxans kann je nach Anwendung in diesen Formulierungen die Oberflächenspannung erniedrigt werden, wodurch die Formulierung gleichmäßiger verlaufen und/oder Substrate besser benetzen kann und wodurch auch eine Kraterbildung vermieden werden kann. Außerdem kann durch Anwesenheit des erfindungsgemäßen Polysiloxans in der Formulierung die Oberflächenglätte der behandelten Materialien erhöht werden. In Autopflegeprodukten ermöglicht die Zusammensetzung u. a. ein sogenanntes Sheeting, also Spreiten von (Regen-)Wasser auf den behandelten Oberflächen. Dies beschleunigt den Aufriss des Wasserfilms, wodurch das Wasser leichter ablaufen kann und eine Trocknung beschleunigt wird. Des Weiteren können die erfindungsgemäßen Polysiloxane entlüftend und/oder entschäumend wirken.

Ein weiterer Aspekt der Erfindung betrifft ein Substrat, insbesondere ein textiles Substrat, welches mit erfindungsgemäßen Polysiloxanen behandelt ist. Bevorzugt enthält das erfindungsgemäße Substrat bezogen auf die Gesamtmasse des textilen Substrats 0,04-2,4 Gew.%, besonders bevorzugt 0,08-1,2 Gew.% an erfindungsgemäßen Polysiloxanen. Das Substrat ist dabei bevorzugt eines der oben genannten Substrate.

In einer besonders bevorzugten Ausführungsform ist das Substrat ein textiles Substrat wie oben beschrieben.

In einer alternativen Ausführungsform ist das Substrat ein metallisches Substrat.

Ein weiterer Aspekt der Erfindung betrifft ein Verfahren zur Behandlung eines Substrats umfassend die Schritte
(i) Bereitstellen eines Substrats,
(ii) Aufbringen eines erfindungsgemäßen Polysiloxans oder einer erfindungsgemäßen Zusammensetzung auf das Substrat, und
(iii) gegebenenfalls Behandeln des nach Schritt (ii) erhaltenen Substrats bei erhöhter Temperatur.

Das Substrat in Schritten (i)-(iii) ist dabei bevorzugt eines der oben genannten Substrate. In einer besonders bevorzugten Ausführungsform ist das Substrat ein textiles Substrat wie oben beschrieben.

Das Aufbringen des erfindungsgemäßen Polysiloxans oder der erfindungsgemäßen Zusammensetzung auf das Substrat in Schritt (ii) kann dabei vorzugsweise durch Foulardieren, Sprühen, Streichen, Tauchen, Pflatschen und/oder durch Ausziehverfahren erfolgen. Beispielsweise kann ein textiles Substrat durch Ausziehverfahren in einem Jet mit einem erfindungsgemäßen Polysiloxan oder einer erfindungsgemäßen Zusammensetzung ausgerüstet werden.

In einer bevorzugten Ausführungsform wird in Schritt (iii) des erfindungsgemäßen Verfahrens Wasser entfernt, bevorzugt bei einer Temperatur von 110-150 °C, ggf. unter vermindertem Druck.

Die nachfolgenden Beispiele dienen der näheren Erläuterung der vorliegenden Erfindung, ohne sie jedoch einzuschränken.

### Beispiele

### Beispiel 1 (nicht erfindungsgemäß):

Gemäß EP 0 294 642 A2, Beispiel 3, wurden 56,8 g (200 mmol) Lauryl(dimethylaminopropyl)amid mit 80,0 g H₂O vorgelegt und bei 20 °C mit 12,0 g (200 mmol) Eisessig versetzt. Nach 30 min wurde auf 50 °C erwärmt und es wurden 590 g (100 mmol) eines Epoxysiloxans mit einem Epoxidgehalt von 0,338 mol/kg und einer durchschnittlichen Kettenlänge von 75 zugetropft. Nach Zugabe von 200 ml Isopropanol wurde 6 h unter Rückfluss gerührt. Das H₂O/Isopropanol-Gemisch wurde bei 100 °C und 0,2 bar abdestilliert. Es wurden 140 g Butyldiglykol zugegeben, wobei ein leicht gelbes Organopolysiloxan erhalten wurde.

### Beispiel 2 (erfindungsgemäß):

500 g eines lateral Si-H-modifizierten Poly(dimethylsiloxan-co-methylhydrosiloxan)s mit 0,089 Gew.-% Si-gebundenem Wasserstoff (entspricht 443 mmol Si-H) und einer durchschnittlichen Kettenlänge von 75 wurden innerhalb von 60 Minuten zu einer Lösung von 28,3 mg Karstedt-Katalysator in 65,7 g (575 mmol) Allylglycidylether, welche zuvor auf 135 °C temperiert wurde, zugetropft. Nach destillativer Entfernung des Allylglycidylether-Überschusses wurden 44,4 g (443 mmol) N-Methylpiperazin bei 135 °C langsam zugetropft, wobei ein klares, leicht gelbliches Organopolysiloxan erhalten wurde (**Zwischenprodukt A**).

76,5 g des erhaltenen **Zwischenprodukts A** (entspricht 114 mmol tert. Stickstoff) wurden zusammen mit 14,0 g Butyldiglykol auf 35 °C erwärmt. Bei dieser Temperatur wurden unter Rühren 6,46 g (57,0 mmol) einer 30%igen wässrigen Wasserstoffperoxidlösung zugegeben. Nach Ende der Exothermie wurde 6 h bei 75 °C nachgerührt, wobei ein leicht gelbliches Organopolysiloxan erhalten wurde.

### Beispiel 3 (erfindungsgemäß):

76,5 g des **Zwischenprodukts A** aus Beispiel 2 (entspricht 114 mmol tert. Stickstoff) wurden zusammen mit 8,50 g Butyldiglykol auf 35 °C erwärmt. Bei dieser Temperatur wurden unter Rühren 12,9 g (114 mmol) einer 30%igen wässrigen Wasserstoffperoxidlösung zugegeben. Nach Ende der Exothermie wurde 6 h bei 75 °C nachgerührt, wobei ein leicht gelbliches Organopolysiloxan erhalten wurde.

### Beispiel 4 (erfindungsgemäß):

500 g eines α,ω-Dihydrogenpolydimethylsiloxans mit 0,035 Gew.-% Si-gebundenem Wasserstoff (entspricht 176 mmol Si-H) und einer durchschnittlichen Kettenlänge von 75 wurden innerhalb von 60 min zu einer Lösung von 26,3 mg Karstedt-Katalysator in 26,1 g (229 mmol) Allylglycidylether, welche zuvor auf 135 °C temperiert wurde, zugetropft. Nach destillativer Entfernung des Allylglycidylether-Überschusses wurden 33,0 g (176 mmol) Bis[3-(dimethylamino)propyl]amin bei 135 °C langsam zugetropft, wobei ein gelbliches Organopolysiloxan erhalten wurde (**Zwischenprodukt B**).

76,5 g des **Zwischenprodukts B** (entspricht 48,7 mmol tert. Stickstoff) wurden zusammen mit 13,0 g Butyldiglykol auf 35 °C erwärmt. Bei dieser Temperatur wurden unter Rühren 5,52 g (48,7 mmol) einer 30%igen wässrigen Wasserstoffperoxidlösung zugegeben. Nach Ende der Exothermie wurde 6 h bei 75 °C nachgerührt, wobei ein leicht gelbliches Organopolysiloxan erhalten wurde.

### Beispiel 5 (erfindungsgemäß):

7,04 g (74,5 mmol) Chloressigsäure wurden in 5,00 g H₂O, 10,0 g Butylglykol gelöst. Zu dieser Lösung wurden unter Rühren 5,96 g (74,5 mmol) 50%ige Natronlauge zugegeben. Nach 15 min Rühren wurden 100 g des **Zwischenprodukts A** aus Beispiel 2 (entspricht 149 mmol tert. Stickstoff) zugegeben und die Mischung wurde 4 h bei 75 °C gerührt, wobei ein leicht gelbliches Organopolysiloxan erhalten wurde.

### Beispiel 6 (erfindungsgemäß):

5,41 g (57,3 mmol) Chloressigsäure wurden in 6,00 g H₂O, 12,0 g Butylglykol gelöst. Zu dieser Lösung wurden unter Rühren 4,58 g (57,3 mmol) 50%ige Natronlauge zugegeben. Nach 15 min Rühren wurden 100 g des **Zwischenprodukts B** aus Beispiel 4 (entspricht 63,6 mmol tert. Stickstoff) zugegeben und die Mischung wurde 4 h bei 75 °C gerührt, wobei ein leicht gelbliches Organopolysiloxan erhalten wurde.

### Beispiel 7 (erfindungsgemäß):

500 g eines α,ω-Dihydrogenpolydimethylsiloxans mit 0,035 Gew.-% Si-gebundenem Wasserstoff (entspricht 176 mmol Si-H) und einer durchschnittlichen Kettenlänge von 75 wurden innerhalb von 60 min zu einer Lösung von 26,3 mg Karstedt-Katalysator in 26,1 g (229 mmol) Allylglycidylether, welche zuvor auf 135 °C temperiert wurde, zugetropft. Nach destillativer Entfernung des Allylglycidylether-Überschusses wurden 33,0 g (176 mmol) Bis[3-(dimethylamino)propyl]amin bei 135 °C langsam zugetropft. Anschließend wurde auf 50 °C abgekühlt, es wurden 896 mg 1,4-Diazabicyclo[2.2.2]octan und 38,1 g (172 mmol) Isophorondiisocyanat zugegeben und die Mischung wurde so lange bei 70 °C gerührt, bis im IR-Spektrum keine NCO-Bande mehr erkennbar war, wobei ein gelbliches Organopolysiloxan erhalten wurde (**Polysiloxanaddukt C**).

75,1 g des **Polysiloxanaddukts C** (entspricht 46,6 mmol tert. Stickstoff) wurden zusammen mit 5,00 g H₂O, 10,0 g Butylglykol, 2,64 g (28,0 mmol) Chloressigsäure und 2,24 g (28,0 mmol) 50%ige Natronlauge auf 75 °C erhitzt. Die Mischung wurde 4 h bei 75 °C gerührt, wobei ein leicht gelbliches Organopolysiloxan erhalten wurde.

### Emulsionsbeispiele

### Allgemeine Emulgiervorschrift:

Zu dem zu emulgierenden Organopolysiloxan wurde bei Raumtemperatur die jeweils angegebene Menge an Emulgator gegeben und mittels wandgängigem Ankerrührer so lange gerührt, bis eine homogene Mischung vorlag. Zu dieser Mischung wurde portionsweise H₂O zugegeben und jeweils so lange nachgerührt, bis die komplette Wasserportion aufgenommen wurde.

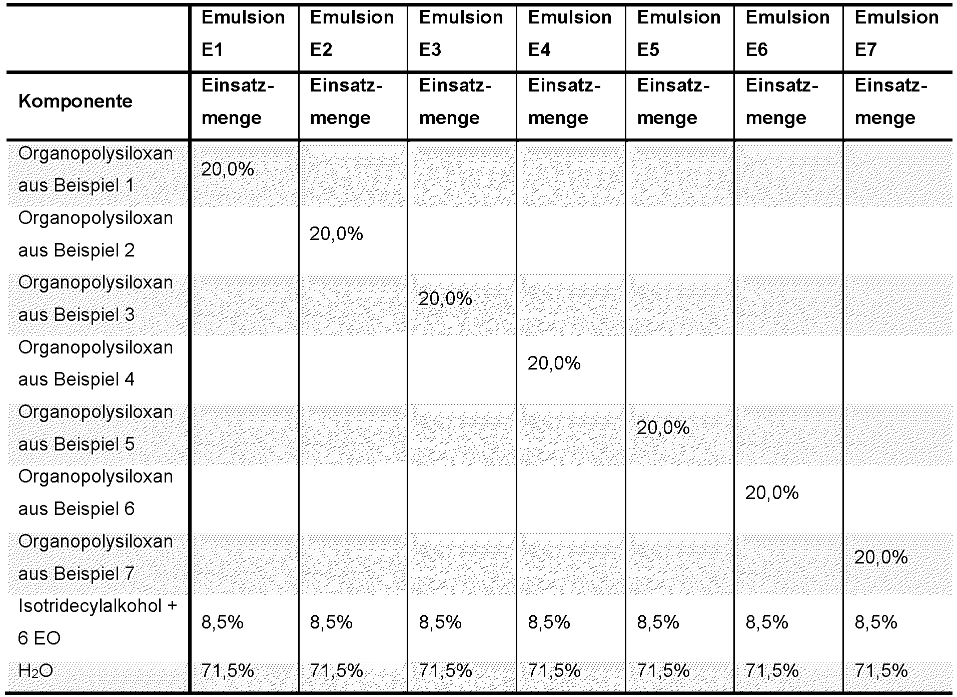

### Anwendungsbeispiele

### Weichgriffbeurteilung

Abschnitte einer nicht optisch aufgehellten Baumwoll-Frotteeware wurden mit einer wässrigen, mit 60%iger Essigsäure auf pH 5 eingestellten Flotte, enthaltend 20 g/l der gemäß den Beispielen hergestellten Emulsionen, im Ausziehverfahren in einem Mathis Labomat 20 Minuten bei 40 °C und einem Flottenverhältnis von 1:10 ausgerüstet. Die überschüssige Flotte wurde anschließend mit einem Laborfoulard bei 3 bar abgequetscht, danach wurde 2 Minuten bei 140 °C getrocknet. Die Umlaufgeschwindigkeit betrug 45 U/min.

Anschließend erfolgte die Beurteilung des Griffcharakters der mit den Emulsionen behandelten Testgewebe. Diese unterliegt individuell unterschiedlichen, subjektiven Kriterien. Um trotzdem zu aussagekräftigen Ergebnissen zu kommen, ist eine Beurteilung durch mindestens 5 Testpersonen erforderlich. Die Auswertung der Ergebnisse erfolgte nach statistischen Methoden, wobei die Notenstufe 1 den weichsten, angenehmsten Griff, die Notenstufe 3 den härtesten, am wenigsten weichen und unangenehmsten Griff innerhalb der Testreihe darstellt.

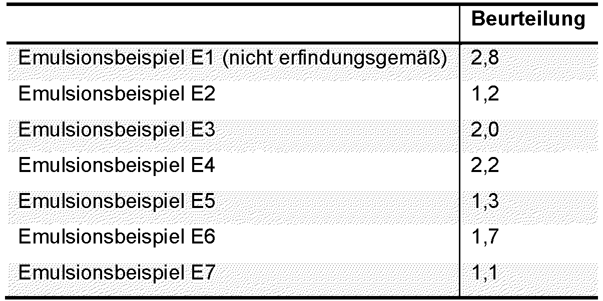

### Hydrophilie

Die Hydrophilie der zur Weichgriffbeurteilung ausgerüsteten Baumwoll-Frotteeware wurde gemäß des TEGEWA-Tropftests (Melliand Textilberichte 68 (1987), 581-583) beurteilt.

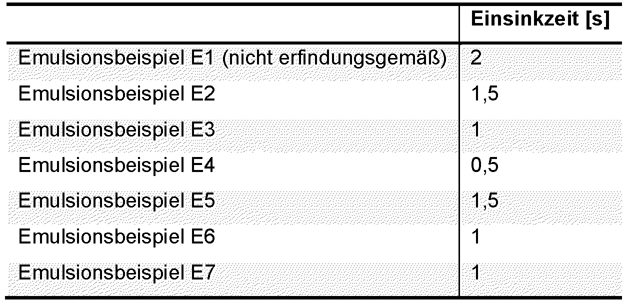

### Anionenstabilität

In zwei Bechergläsern wurden jeweils 100 ml der zu testenden Emulsion in Wasser mit einer Konzentration von 40 g/l angesetzt. In das erste Becherglas wurden 100 ml einer Lösung von 4 g/L VEROLAN^{®} NEW (organisches Dispergiermittel mit Polyacrylaten und Alkylphosphonat, anionaktiv) hinzugegeben. In das zweite Becherglas wurden 100 ml einer Lösung von 12 g/L RUCO-BLANC^{®} AMA (Weißtöner, Stilben-Derivat, anionaktiv) hinzugegeben. Die Flotten wurden mit 60%iger Essigsäure auf pH 5 eingestellt.

Die Beurteilung erfolgte nach sechs Stunden Standzeit, gemäß folgender Benotung:
1 Flotte ist klar
2 Flotte ist trüb bzw. "leicht trüb"
3 Flotte ist flockig bzw. weist einen Bodensatz auf, der sich wieder einrühren lässt (flockt nicht innerhalb von 1 Minute wieder aus)
4 Große Flockenbildung bzw. Bodensatz, welcher nicht mehr einrührbar ist
5 Ölige Abscheidungen an Flottenoberfläche oder Becherglas

Der Test gilt als bestanden, wenn die Beurteilung nicht schlechter als "3" lautet.

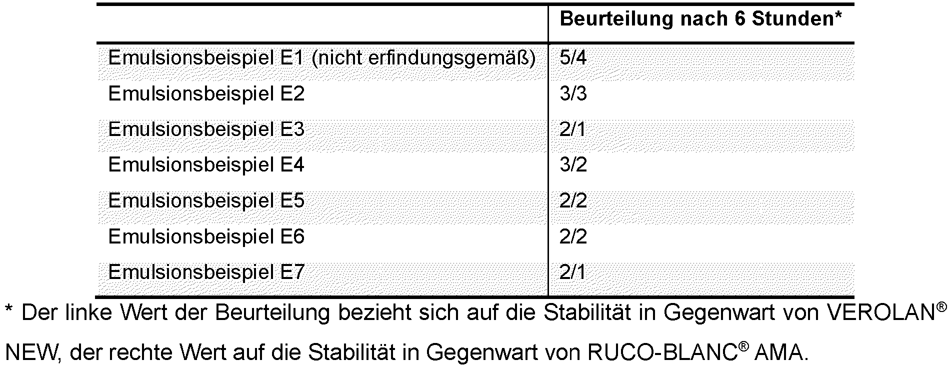

### Thermische Vergilbung

Abschnitte einer gebleichten, nicht optisch aufgehellten Baumwoll-Modal-Maschenware wurden mit einer wässrigen Flotte, enthaltend 20 g/l der gemäß den Beispielen hergestellten Emulsionen und 0,5 g/l 60%ige Essigsäure auf einem Laborfoulard mit einer Nassaufnahme von 80 % imprägniert, 2 Minuten bei 120°C getrocknet und anschließend 2 Minuten bei 170°C thermofixiert. Anschließend wurde der Weißgrad der Muster nach Ganz (Applied Optics 15 (1976) 9, 2039-2058) auf dem Weißgrad-Messgerät "texflash 2000" der Firma "datacolor international" (Schweiz) gemessen.

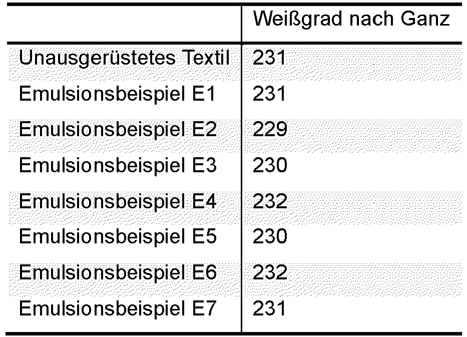

Die erfindungsgemäßen Zubereitungen führen zu keiner Vergilbung des Textilsubstrats. Der Weißgrad der mit den erfindungsmäßen Zubereitungen ausgerüsteten Substrate entspricht dem des unbehandelten Textils.

### Phenolische Vergilbung

Abschnitte einer gebleichten, nicht optisch aufgehellten Baumwoll-Modal-Maschenware wurden mit einer wässrigen Flotte, enthaltend 40 g/l der gemäß den Beispielen hergestellten Emulsionen und 0,5 g/l 60%ige Essigsäure auf einem Laborfoulard mit einer Nassaufnahme von 80% imprägniert und anschließend 2 Minuten bei 120 °C getrocknet. Anschließend erfolgte die Beurteilung der Vergilbung gemäß des Sandwich-Tests (DIN EN ISO 105-X18).

Jede Messprobe und das Kontrollgewebe werden hierzu einzeln zwischen ein gefaltetes Prüfpapier zwischen zwei Glasplatten in einem waagerechten Aufbau gelegt. Der Stapel aus Platten, Prüfpapieren, Messproben und Kontrollgewebe wird anschließend luftdicht verpackt und in einem Wärmeschrank bei 50 °C für 16 h inkubiert.

Nach Öffnen der Packung werden mögliche Farbänderungen sofort mit Hilfe des Graumaßstabs auf einer Skala von 1-5 gemäß ISO 105-A01 bewertet.

Je höher dabei der Wert auf der Grauskala ist, desto weniger vergilbt ist das Textil:

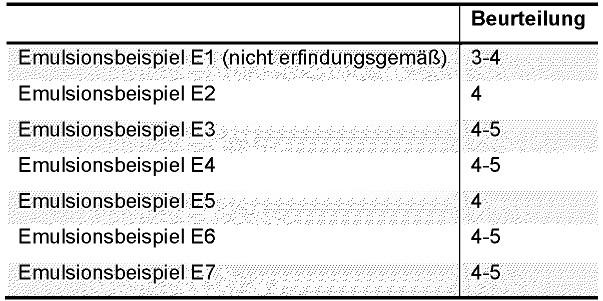

### Jetstabilität

In einem Becherglas wurden 400 mL Flotte, enthaltend 4 g/l Natriumsulfat und 5 g/L der jeweils zu testenden Emulsion in Wasser, mit 60%iger Essigsäure auf pH 4,5 eingestellt. Anschließend wurde die wässrige Flotte auf 40 °C erwärmt und zwanzig Minuten lang bei dieser Temperatur mit einem Schrägblattrührer bei zweitausend Umdrehungen pro Minute gerührt. Nach Ablauf dieser Zeit wurde der Rührer abgestellt und die Flüssigkeit nach einer Stunde Ruhezeit hinsichtlich Abscheidungen beurteilt. Dieser Test soll die mechanischen Kräfte eines Jetverfahrens in Anwesenheit von Textilhilfsmitteln simulieren, die aus vorausgegangenen Schritten der Veredelung auf dem Textil verblieben sind.

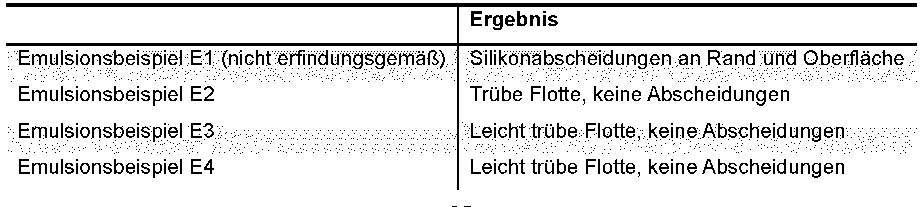

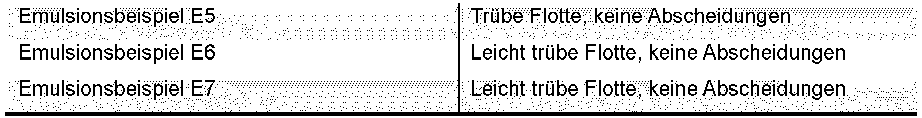

Folgende Punkte fassen die Erfindung zusammen:
1. Polysiloxan der allgemeinen Formel A 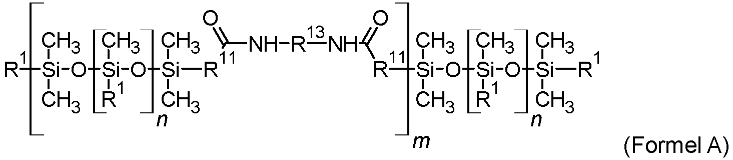 wobei
   - R¹: unabhängig voneinander
   Methyl, 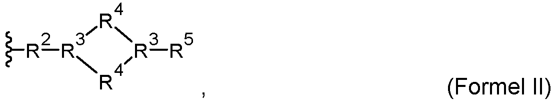 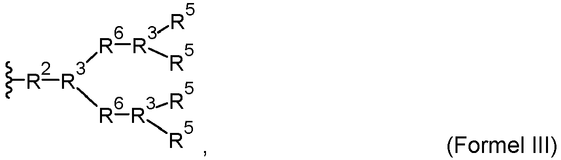 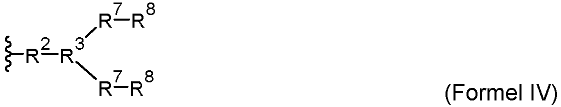 oder 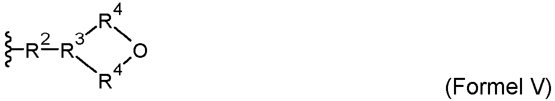 ist, mit der Maßgabe, dass in Formel A mindestens ein R¹ einer der Formeln II-V entspricht,
   - R²: unabhängig voneinander 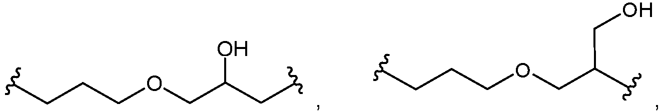 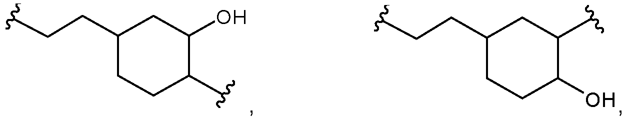 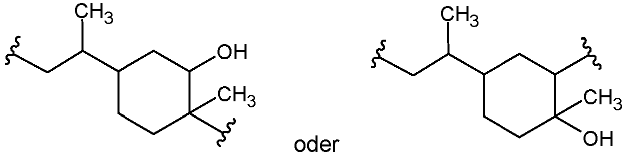 ist,
   - R³: unabhängig voneinander 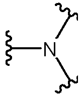 oder eine zwitterionische Gruppe ausgewählt aus 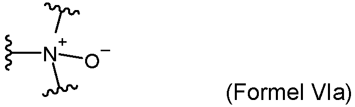 und 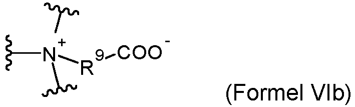 ist, mit der Maßgabe, dass mindestens ein R³ in Formel A eine zwitterionische Gruppe ist,
   - R⁴: unabhängig voneinander ein unverzweigtes oder verzweigtes C₁₋₇-Alkylen, bevorzugt ein unverzweigtes C₁₋₅-Alkylen, besonders bevorzugt -(CH₂)₂- ist,
   - R⁵: unabhängig voneinander ein verzweigtes oder unverzweigtes C₁₋₁₈-Alkyl, bevorzugt ein unverzweigtes C₁₋₈-Alkyl, besonders bevorzugt Methyl ist,
   - R⁶: unabhängig voneinander ein unverzweigtes C₂₋₅-Alkylen, bevorzugt -(CH₂)₂- oder -(CH₂)₃-ist,
   - R⁷: unabhängig voneinander ein unverzweigtes oder verzweigtes C₁₋₁₈-Alkylen, bevorzugt ein unverzweigtes C₁₋₈-Alkylen, besonders bevorzugt -(CH₂)₂- oder Methylen ist,
   - R⁸: unabhängig voneinander H oder OH ist,
   - R⁹: unabhängig voneinander ein unverzweigtes oder verzweigtes C₁₋₁₈-Alkylen, bevorzugt ein unverzweigtes C₁₋₈-Alkylen, besonders bevorzugt Methylen ist,
   - R¹¹: unabhängig voneinander 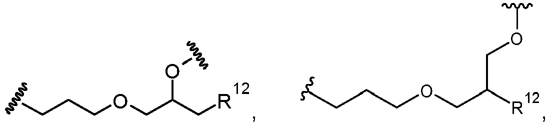 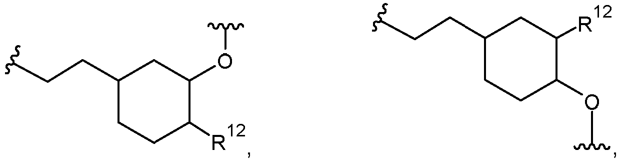 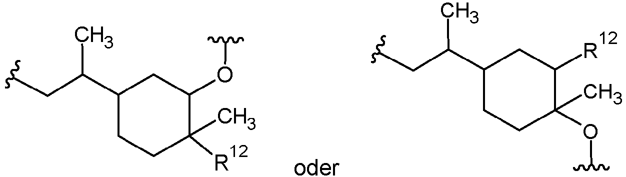 ist,
   - R¹²: unabhängig voneinander 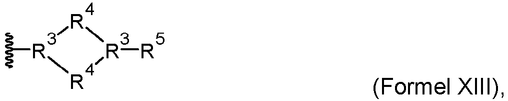 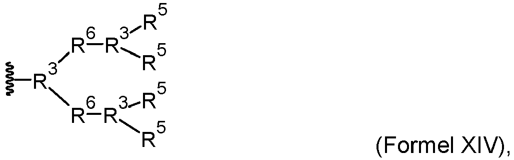 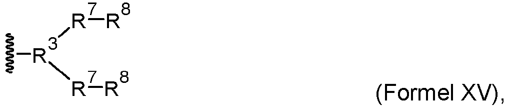 oder 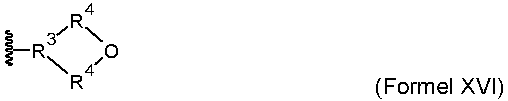 ist,
   - R¹³: unabhängig voneinander ein aliphatisches oder cyclisches C₁₋₁₈-Alkylen oder Arylen ist, jeweils ggf. substituiert mit C₁₋₈-Alkyl oder Benzyl, bevorzugt unverzweigtes C₁₋₈-Alkylen, insbesondere -(CH₂)₄-, -(CH₂)₆-, 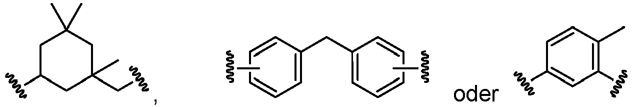 ist,
   - n: eine ganze Zahl von 20-2000, bevorzugt 40-1000, besonders bevorzugt 40-180 ist, und
   - m: 0 oder eine ganze Zahl größer 0, bevorzugt 0 oder 1-2000, besonders bevorzugt 0 oder 1-55 ist.
2. Polysiloxan gemäß Punkt 1, wobei 0-99,9%, bevorzugt 50-99,9%, stärker bevorzugt 80-99,9% und besonders bevorzugt 90-99,9% oder 0-99,999%, bevorzugt 50-99,999%, stärker bevorzugt 80-99,999% und besonders bevorzugt 90-99,999% der R¹-Substituenten Methyl sind.
3. Polysiloxan gemäß einem der vorangegangenen Punkte, wobei die beiden endständigen R¹-Substituenten Methyl sind und mindestens ein lateraler R¹-Substituent einer der Formeln II-V entspricht.
4. Polysiloxan gemäß einem der Punkte 1-2, wobei alle lateralen R¹-Substituenten Methyl sind und die beiden endständigen R¹-Substituenten ausgewählt sind aus den Formeln II-V.
5. Polysiloxan gemäß einem der vorangegangenen Punkte, wobei alle R¹-Substituenten ausgewählt sind aus Methyl und Formel II.
6. Polysiloxan gemäß einem der vorangegangenen Punkte, wobei 10-100%, bevorzugt 40-99,9%, besonders bevorzugt 50-95% und am meisten bevorzugt 60-80% von R³ in Formel A zwitterionische Gruppen sind.
7. Polysiloxan gemäß einem der vorangegangenen Punkte, wobei alle zwitterionischen Gruppen als Formel Vla vorliegen.
8. Polysiloxan gemäß einem der Punkte 1-6, wobei alle zwitterionischen Gruppen als Formel VIb vorliegen.
9. Polysiloxan gemäß einem der vorangegangenen Punkte, wobei R² bevorzugt 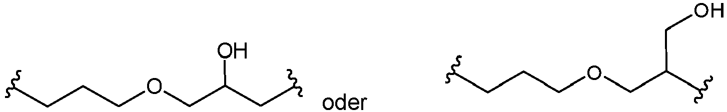 ist.
10. Polysiloxan gemäß einem der vorangegangenen Punkte, wobei R¹¹ 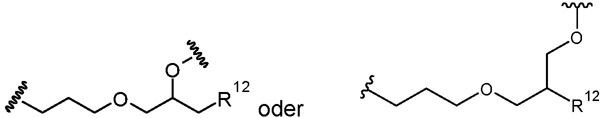 ist.
11. Polysiloxan gemäß Punkt 10, wobei R¹² einer der Formeln XIII oder XIV entspricht.
12. Polysiloxan gemäß einem der vorangegangenen Punkte, wobei im Wesentlichen alle, insbesondere 90-99,999 %, der lateralen R¹-Substituenten Methyl sind, wenn m größer 0 ist.
13. Polysiloxan gemäß einem der Punkte 1-9, mit der allgemeinen Formel I 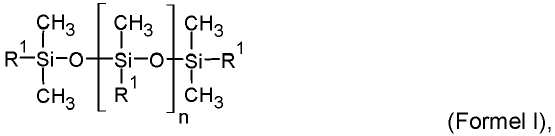 wobei
   - R¹: unabhängig voneinander
   Methyl, 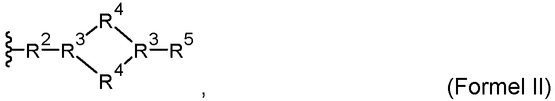 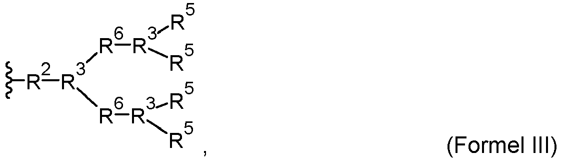 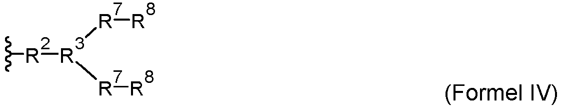 oder 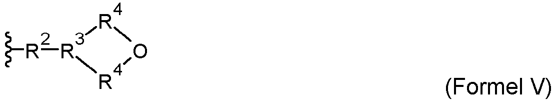 ist, mit der Maßgabe, dass in Formel I mindestens ein R¹ einer der Formeln II-V entspricht,
   - R²: unabhängig voneinander 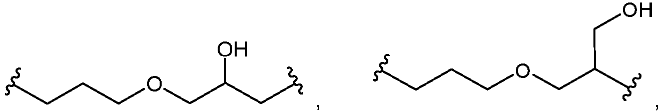 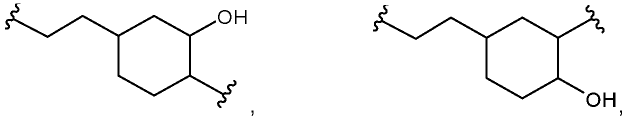 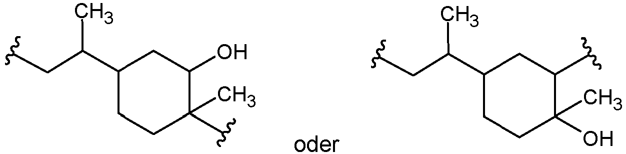 ist,
   - R³: unabhängig voneinander 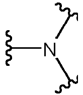 oder eine zwitterionische Gruppe ausgewählt aus 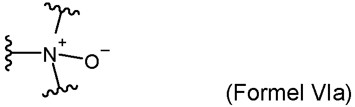 und 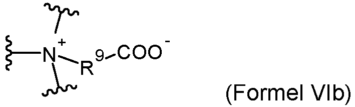 ist, mit der Maßgabe, dass mindestens ein R³ in Formel I eine zwitterionische Gruppe ist,
   - R⁴: unabhängig voneinander ein unverzweigtes oder verzweigtes C₁₋₇-Alkylen, bevorzugt ein unverzweigtes C₁₋₅-Alkylen, besonders bevorzugt -(CH₂)₂- ist,
   - R⁵: unabhängig voneinander ein verzweigtes oder unverzweigtes C₁₋₁₈-Alkyl, bevorzugt ein unverzweigtes C₁₋₈-Alkyl, besonders bevorzugt Methyl ist,
   - R⁶: unabhängig voneinander ein unverzweigtes C₂₋₅-Alkylen, bevorzugt -(CH₂)₂- oder -(CH₂)₃-ist,
   - R⁷: unabhängig voneinander ein unverzweigtes oder verzweigtes C₁₋₁₈-Alkylen, bevorzugt ein unverzweigtes C₁₋₈-Alkylen, besonders bevorzugt -(CH₂)₂- oder Methylen ist,
   - R⁸: unabhängig voneinander H oder OH ist,
   - R⁹: unabhängig voneinander ein unverzweigtes oder verzweigtes C₁₋₁₈-Alkylen, bevorzugt ein unverzweigtes C₁₋₈-Alkylen, besonders bevorzugt Methylen ist, und
   - n: eine ganze Zahl von 20-2000, bevorzugt 40-1000, besonders bevorzugt 40-180 ist.
14. Verfahren zur Herstellung von Polysiloxanen gemäß einem der vorangegangenen Punkte, umfassend
   (a) Bereitstellen eines Polysiloxans der allgemeinen Formel VII 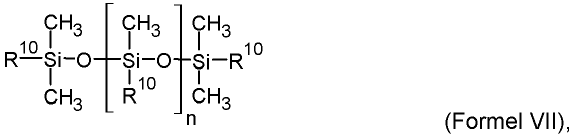 worin
      - R¹⁰: unabhängig voneinander
      Methyl, 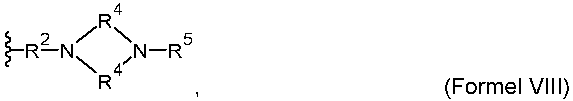 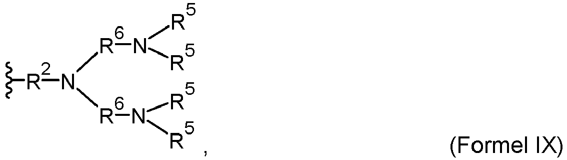 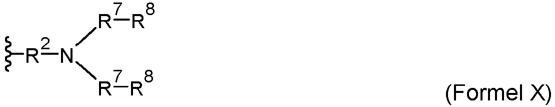 oder 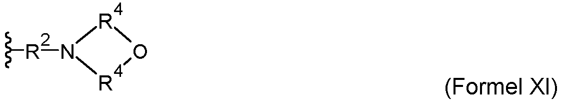 ist, mit der Maßgabe, dass in Formel VII mindestens ein R¹⁰ einer der Formeln VIII-XI entspricht,
   (b) ggf. Umsetzen des Polysiloxans der allgemeinen Formel VII mit einem Diisocyanat der Formel OCN-R¹³-NCO, und (c) Umsetzen des Polysiloxans der Formel VII oder des nach Schritt (b) erhaltenen Polysiloxanaddukts mit einem Reaktanden ausgewählt aus einem Peroxid und/oder einer Verbindung der allgemeinen Formel XII 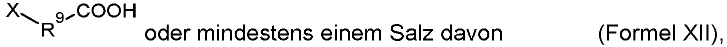 wobei X ein Halogen, insbesondere Cl oder Br ist,
   und wobei das Peroxid bevorzugt Wasserstoffperoxid (H₂O₂), Di-tert-Butylperoxid, *tert-*Butylhydroperoxid, tert-Butylperoxybenzoat, meta-Chlorperbenzoesäure, Dibenzoylperoxid, Diacetylperoxid, Peroxyessigsäure, Dicumylperoxid, Cumolhydroperoxid, Methyl-ethyl-ketonperoxid, Natriumperoxid und/oder Bariumperoxid und besonders bevorzugt Wasserstoffperoxid (H₂O₂) ist.
15. Verfahren gemäß Punkt 14, wobei das molare Verhältnis zwischen Reaktand und den tertiären Aminogruppen im Polysiloxan der Formel VII oder im nach Schritt (b) erhaltenen Polysiloxanaddukt 0,1:1-1:1, bevorzugt 0,4:1-0,999:1, besonders bevorzugt 0,5:1-0,95:1 und am meisten bevorzugt 0,6:1-0,8:1 ist.
16. Verfahren gemäß Punkt 14 oder 15, wobei in Schritt b) das molare Verhältnis der Isocyanatgruppen des Diisocyanats der allgemeinen Formel OCN-R¹³-NCO zu den Isocyanat-reaktiven Hydroxy-Gruppen des Polysiloxans der allgemeinen Formel VII von 0,1:1-1:1, stärker bevorzugt von 0,4:1-0,999:1, besonders bevorzugt von 0,5:1-0,95:1 und am meisten bevorzugt von 0,6:1-0,9:1 ist.
17. Verfahren gemäß einem der Punkte 14-16, wobei in Schritt b) das Diisocyanat der allgemeinen Formel OCN-R¹³-NCO ausgewählt ist aus der Gruppe bestehend aus Toluol-2,4-diisocyanat, 2,4'-Diphenylmethandiisocyanat, 4,4'-Diphenylmethandiisocyanat (MDI), höherkettige Homologe des Diphenylmethandiisocyanates (Polymer-MDI), Tetramethylen-diisocyanat, Hexamethylendiisocyanat und/oder Isophorondiisocyanat.
18. Verfahren gemäß einem der Punkte 14-17, wobei in Schritt b) und/oder c) die Reaktion bei 15-150 °C, bevorzugt bei 20-105 °C, stärker bevorzugt bei 25-95 °C, noch stärker bevorzugt bei 40-90 °C und besonders bevorzugt bei 70-85 °C durchgeführt wird.
19. Verfahren gemäß einem der Punkte 14-18, wobei Schritt b) unter Verwendung eines Lösungsmittels oder in Abwesenheit eines Lösungsmittels durchgeführt wird, bevorzugt in Abwesenheit eines Lösungsmittels.
20. Verfahren gemäß einem der Punkte 14-19, wobei Schritt b) unter Verwendung eines Katalysators, insbesondere auf Basis eines tertiären Amins, einer Bismuth-Verbindung und/oder einer zinnorganischen Verbindung durchgeführt wird.
21. Verfahren gemäß einem der Punkte 14-20, wobei der Reaktionsverlauf in Schritt b) titrimetrisch oder mit IR-Spektroskopie überwacht wird.
22. Verfahren gemäß einem der Punkte 14-21, wobei die Reaktion in Schritt c) in einem Lösungsmittel durchgeführt wird, welches bevorzugt Wasser und/oder mindestens ein organisches Lösungsmittel umfasst.
23. Zusammensetzung umfassend
   (i) mindestens ein Polysiloxan nach einem der Punkte 1-13 und
   (ii) ein Lösungsmittel, insbesondere Wasser und/oder ein organisches Lösungsmittel.
24. Zusammensetzung gemäß Punkt 23, wobei die Zusammensetzung bezogen auf ihre Gesamtmasse 0,005-99,9 Gew.%, bevorzugt 5-99 Gew.%, besonders bevorzugt 10-90 Gew.% der Komponente (i) enthält.
25. Zusammensetzung gemäß einem der Punkte 23-24, ferner umfassend
   (iii) mindestens einen anionischen, kationischen, nichtionischen oder amphoteren Emulgator, bevorzugt mindestens einen nichtionischen Emulgator, besonders bevorzugt Ethoxylierungsprodukte aliphatischer Alkohole.
26. Zusammensetzung gemäß Punkt 25, wobei der Emulgator (iii) bezogen auf Komponente (i) mit 2-100 Gew.%, bevorzugt mit 10-80 Gew.%, besonders bevorzugt mit 20-70 Gew.% zugegen ist.
27. Zusammensetzung gemäß einem der Punkte 23-26, wobei das organische Lösungsmittel bevorzugt aus der Gruppe der mono- und polyfunktionellen Alkohole und/oder deren Etherverbindungen und/oder deren Esterverbindungen ist.
28. Zusammensetzung gemäß einem der Punkte 23-27, ferner umfassend
   (iv) mindestens ein Additiv, beispielsweise einen Verflüssiger, Glycerin, Harnstoff und/oder mindestens eine Säure und/oder mindestens ein Weichgriffmittel, bevorzugt ein organomodifiziertes Polysiloxan.
29. Zusammensetzung gemäß einem der Punkte 23-28, welche als Emulsion, bevorzugt als o/w-Emulsion vorliegt.
30. Verwendung eines Polysiloxans gemäß einem der Punkte 1-13 oder einer Zusammensetzung gemäß einem der Punkte 23-29 zur Behandlung eines Substrats, insbesondere zur Ausrüstung eines textilen Substrats, oder als Additiv in Farb-, Lasur-, Lack- und/oder Autopflege-Formulierungen.
31. Verwendung nach Punkt 30, wobei das textile Substrat ein Gewebe, Gewirk, Vlies, Faser und/oder Leder ist.
32. Verwendung gemäß einem der Punkte 30-31, wobei das textile Substrat natürliche Fasern, insbesondere Baumwolle und/oder Wolle, und/oder synthetische Fasern, insbesondere Viskose, Polyester, Polyamid und/oder Polyacrylnitril enthält.
33. Verwendung gemäß einem der Punkte 30-32 zur Verbesserung des Weichgriffs des textilen Substrats.
34. Verwendung gemäß Punkt 30 zur Verbesserung der Benetzungs-, Spreitungs- und/oder Verlaufseigenschaften von Farb-, Lasur-, Lack- und/oder Autopflege-Formulierungen.
35. Substrat, insbesondere textiles Substrat, welches mit Polysiloxanen gemäß einem der Punkte 1-13 behandelt ist.
36. Substrat gemäß Punkt 35, welches bezogen auf die Gesamtmasse des textilen Substrats 0,04-2,4 Gew.%, bevorzugt 0,08-1,2 Gew.% an Polysiloxanen enthält.
37. Verfahren zur Behandlung eines Substrats umfassend die Schritte
   (iii) Bereitstellen eines Substrats,
   (iv) Aufbringen des Polysiloxans gemäß einem der Punkte 1-13 oder einer Zusammensetzung gemäß einem der Punkte 23-29 auf das Substrat, und
   (v) gegebenenfalls Behandeln des nach Schritt (ii) erhaltenen Substrats bei erhöhter Temperatur.
38. Verfahren zur Behandlung eines Substrats gemäß Punkt 37, wobei Schritt (ii) durch Foulardieren, Sprühen, Streichen, Tauchen, Pflatschen und/oder durch Ausziehverfahren erfolgt.
39. Verfahren zur Behandlung eines Substrats gemäß einem der Punkte 37-38, wobei in Schritt (iii) Wasser entfernt wird, bevorzugt bei einer Temperatur von 110-150 °C.

## Patentansprüche

1. Polysiloxan der allgemeinen Formel A 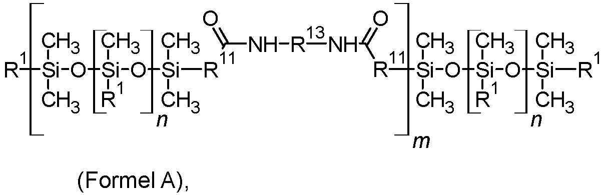 wobei
R¹ unabhängig voneinander
Methyl, 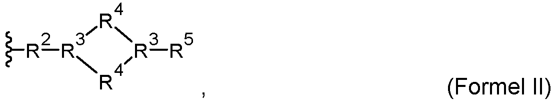 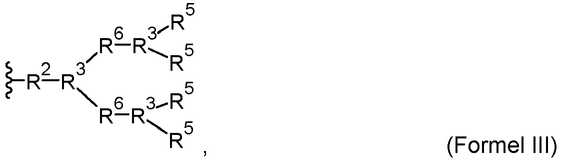 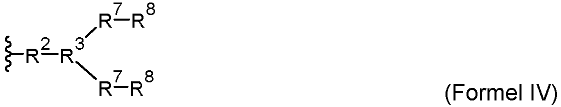 oder 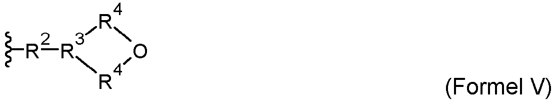 ist, mit der Maßgabe, dass in Formel A mindestens ein R¹ einer der Formeln II-V entspricht,
R² unabhängig voneinander 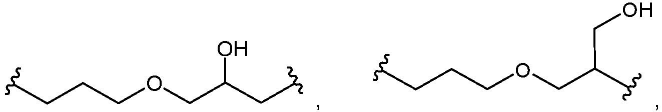 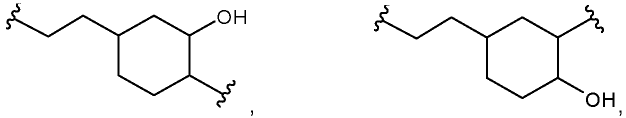 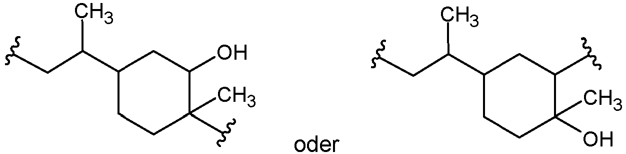 ist,
R³ unabhängig voneinander 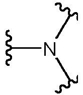 oder eine zwitterionische Gruppe ausgewählt aus 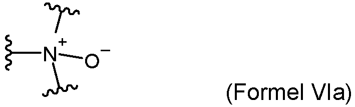 und 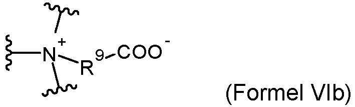 ist, mit der Maßgabe, dass mindestens ein R³ in Formel A eine zwitterionische Gruppe ist,
R⁴ unabhängig voneinander ein unverzweigtes oder verzweigtes C₁₋₇-Alkylen, bevorzugt ein unverzweigtes C₁₋₅-Alkylen, besonders bevorzugt -(CH₂)₂- ist,
R⁵ unabhängig voneinander ein verzweigtes oder unverzweigtes C₁₋₁₈-Alkyl, bevorzugt ein unverzweigtes C₁₋₈-Alkyl, besonders bevorzugt Methyl ist,
R⁶ unabhängig voneinander ein unverzweigtes C₂₋₅-Alkylen, bevorzugt -(CH₂)₂- oder -(CH₂)₃-ist,
R⁷ unabhängig voneinander ein unverzweigtes oder verzweigtes C₁₋₁₈-Alkylen, bevorzugt ein unverzweigtes C₁₋₈-Alkylen, besonders bevorzugt -(CH₂)₂- oder Methylen ist,
R⁸ unabhängig voneinander H oder OH ist,
R⁹ unabhängig voneinander ein unverzweigtes oder verzweigtes C₁₋₁₈-Alkylen, bevorzugt ein unverzweigtes C₁₋₈-Alkylen, besonders bevorzugt Methylen ist,
R¹¹ unabhängig voneinander 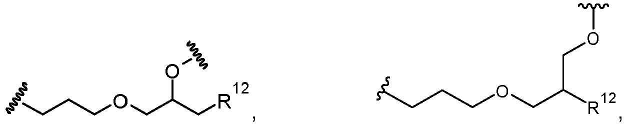 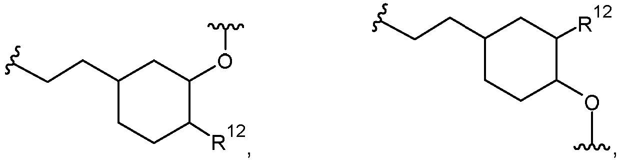 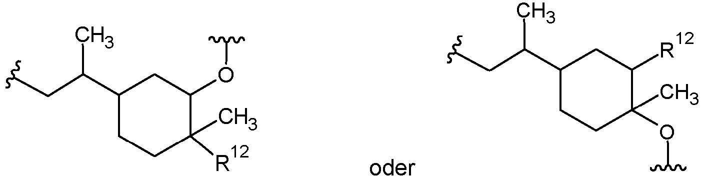 ist,
R¹² unabhängig voneinander 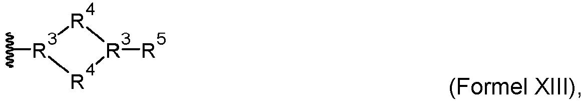 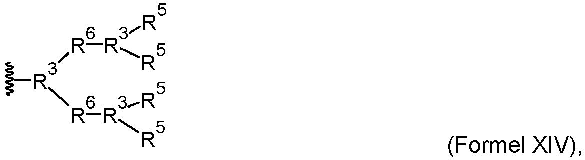 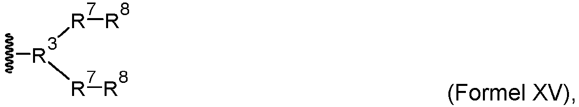 oder 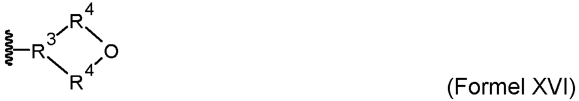 ist,
R¹³ unabhängig voneinander ein aliphatisches oder cyclisches C₁₋₁₈-Alkylen oder Arylen ist, jeweils ggf. substituiert mit C₁₋₈-Alkyl oder Benzyl, bevorzugt unverzweigtes C₁₋₈-Alkylen, insbesondere -(CH₂)₄-, -(CH₂)₆-, 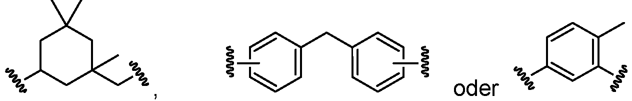 ist,
n eine ganze Zahl von 20-2000, bevorzugt 40-1000, besonders bevorzugt 40-180 ist, und
m 0 oder eine ganze Zahl größer 0, bevorzugt 0 oder 1-2000, besonders bevorzugt 0 oder 1-55 ist.

2. Polysiloxan gemäß Anspruch 1, wobei 0-99,9%, bevorzugt 50-99,9%, stärker bevorzugt 80-99,9% und besonders bevorzugt 90-99,9% oder 0-99,999%, bevorzugt 50-99,999%, stärker bevorzugt 80-99,999% und besonders bevorzugt 90-99,999% der R¹-Substituenten Methyl sind.

3. Polysiloxan gemäß einem der vorangegangenen Ansprüche, wobei die beiden endständigen R¹-Substituenten Methyl sind und mindestens ein lateraler R¹-Substituent einer der Formeln II-V entspricht, oder
alle lateralen R¹-Substituenten Methyl sind und die beiden endständigen R¹-Substituenten ausgewählt sind aus den Formeln II-V.

4. Polysiloxan gemäß einem der vorangegangenen Ansprüche, wobei alle R¹-Substituenten ausgewählt sind aus Methyl und Formel II, und/oder
wobei R² 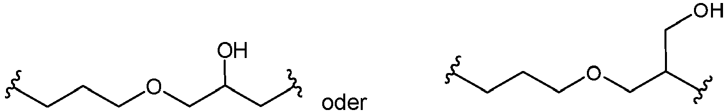 ist, und/oder wobei R¹¹ 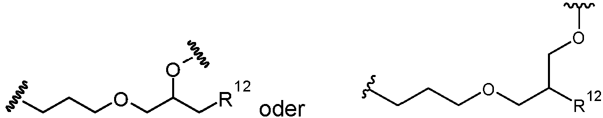 ist und/oder wobei R¹² einer der Formeln XIII oder XIV entspricht.

5. Polysiloxan gemäß einem der vorangegangenen Ansprüche, wobei 10-100%, bevorzugt 40-99,9%, besonders bevorzugt 50-95% und am meisten bevorzugt 60-80% von R³ in Formel A zwitterionische Gruppen sind, und/oder
alle zwitterionischen Gruppen als Formel Vla oder alle zwitterionischen Gruppen als Formel VIb vorliegen.

6. Polysiloxan gemäß einem der vorangegangenen Ansprüche, mit der allgemeinen Formel I 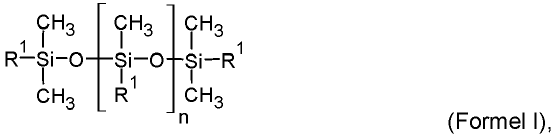 wobei
R¹ unabhängig voneinander
Methyl, 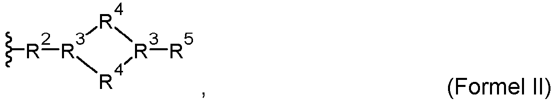 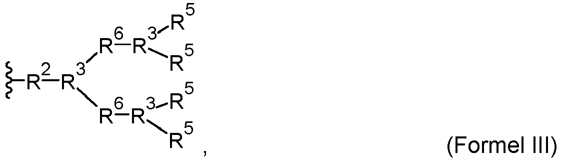 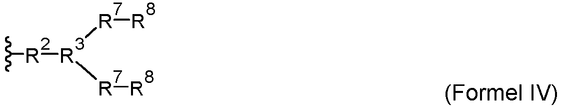 oder 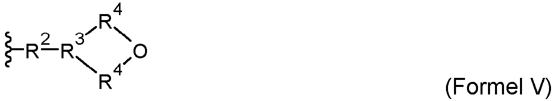 ist, mit der Maßgabe, dass in Formel I mindestens ein R¹ einer der Formeln II-V entspricht,
R² unabhängig voneinander 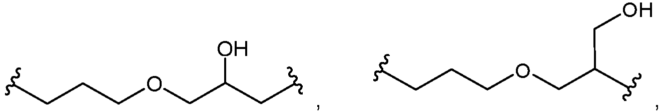 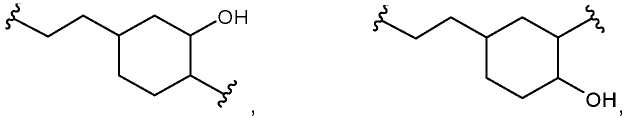 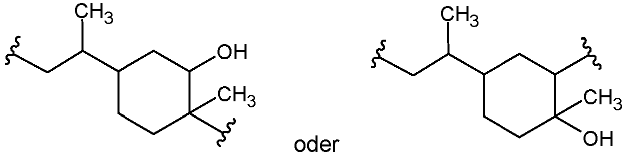 ist,
R³ unabhängig voneinander 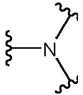 oder eine zwitterionische Gruppe ausgewählt aus 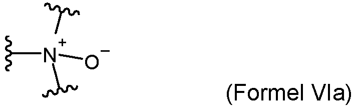 und 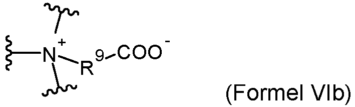 ist, mit der Maßgabe, dass mindestens ein R³ in Formel I eine zwitterionische Gruppe ist,
R⁴ unabhängig voneinander ein unverzweigtes oder verzweigtes C₁₋₇-Alkylen, bevorzugt ein unverzweigtes C₁₋₅-Alkylen, besonders bevorzugt -(CH₂)₂- ist,
R⁵ unabhängig voneinander ein verzweigtes oder unverzweigtes C₁₋₁₈-Alkyl, bevorzugt ein unverzweigtes C₁₋₈-Alkyl, besonders bevorzugt Methyl ist,
R⁶ unabhängig voneinander ein unverzweigtes C₂₋₅-Alkylen, bevorzugt -(CH₂)₂- oder -(CH₂)₃-ist,
R⁷ unabhängig voneinander ein unverzweigtes oder verzweigtes C₁₋₁₈-Alkylen, bevorzugt ein unverzweigtes C₁₋₈-Alkylen, besonders bevorzugt -(CH₂)₂- oder Methylen ist,
R⁸ unabhängig voneinander H oder OH ist,
R⁹ unabhängig voneinander ein unverzweigtes oder verzweigtes C₁₋₁₈-Alkylen, bevorzugt ein unverzweigtes C₁₋₈-Alkylen, besonders bevorzugt Methylen ist, und
n eine ganze Zahl von 20-2000, bevorzugt 40-1000, besonders bevorzugt 40-180 ist.

7. Verfahren zur Herstellung von Polysiloxanen gemäß einem der vorangegangenen Ansprüche, umfassend die Schritte
(a) Bereitstellen eines Polysiloxans der allgemeinen Formel VII 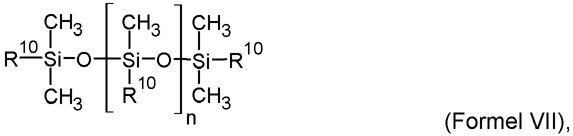 worin
R¹⁰ unabhängig voneinander
Methyl, 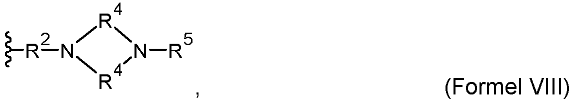 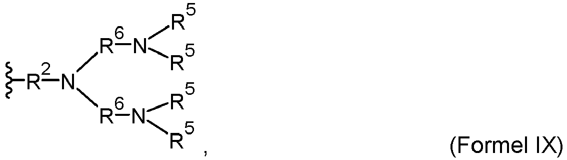 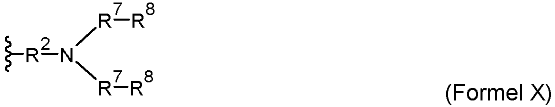 oder 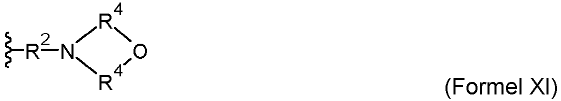 ist, mit der Maßgabe, dass in Formel VII mindestens ein R¹⁰ einer der Formeln VIII-XI entspricht,
(b) ggf. Umsetzen des Polysiloxans der allgemeinen Formel VII mit einem Diisocyanat der Formel OCN-R¹³-NCO, und
(c) Umsetzen des Polysiloxans der Formel VII oder des nach Schritt (b) erhaltenen Polysiloxanaddukts mit einem Reaktanden ausgewählt aus einem Peroxid und/oder einer Verbindung der allgemeinen Formel XII 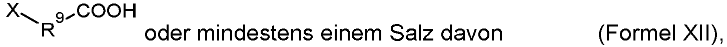
wobei X ein Halogen, insbesondere Cl oder Br ist,
und wobei das Peroxid bevorzugt Wasserstoffperoxid (H₂O₂), Di-tert-Butylperoxid, *tert-*Butylhydroperoxid, tert-Butylperoxybenzoat, meta-Chlorperbenzoesäure, Dibenzoylperoxid, Diacetylperoxid, Peroxyessigsäure, Dicumylperoxid, Cumolhydroperoxid, Methyl-ethyl-ketonperoxid, Natriumperoxid und/oder Bariumperoxid und besonders bevorzugt Wasserstoffperoxid (H₂O₂) ist,
wobei das molare Verhältnis zwischen Reaktand und den tertiären Aminogruppen im Polysiloxan der Formel VII oder im nach Schritt (b) erhaltenen Polysiloxanaddukt bevorzugt 0,1:1-1:1, stärker bevorzugt 0,4:1-0,999:1, besonders bevorzugt 0,5:1-0,95:1 und am meisten bevorzugt 0,6:1-0,8:1 ist.

8. Verfahren gemäß Anspruch 7, wobei in Schritt b) das molare Verhältnis der Isocyanatgruppen des Diisocyanats der allgemeinen Formel OCN-R¹³-NCO zu den Isocyanat-reaktiven Hydroxy-Gruppen des Polysiloxans der allgemeinen Formel VII von 0,1:1-1:1, stärker bevorzugt von 0,4:1-0,999:1, besonders bevorzugt von 0,5:1-0,95:1 und am meisten bevorzugt von 0,6:1-0,9:1 ist, und/oder
wobei in Schritt b) das Diisocyanat der allgemeinen Formel OCN-R¹³-NCO ausgewählt ist aus der Gruppe bestehend aus Toluol-2,4-diisocyanat, 2,4'-Diphenylmethandiisocyanat, 4,4'-Diphenylmethandiisocyanat (MDI), höherkettige Homologe des Diphenylmethandiisocyanates (Polymer-MDI), Tetramethylendiisocyanat, Hexamethylendiisocyanat und/oder Isophorondiisocyanat.

9. Verfahren gemäß einem der Ansprüche 7-8, wobei in Schritt c) die Reaktion in einem Lösungsmittel durchgeführt wird, welches bevorzugt Wasser und/oder mindestens ein organisches Lösungsmittel umfasst, und/oder
wobei Schritt b) unter Verwendung eines Lösungsmittels oder in Abwesenheit eines Lösungsmittels durchgeführt wird, und/oder
wobei Schritt b) und/oder Schritt c) bei 15-150 °C, stärker bevorzugt bei 20-105 °C, noch stärker bevorzugt bei 25-95 °C, noch stärker bevorzugt bei 40-90 °C und besonders bevorzugt bei 70-85 °C durchgeführt wird.

10. Zusammensetzung umfassend
(i) mindestens ein Polysiloxan nach einem der Ansprüche 1-6 und
(ii) ein Lösungsmittel, insbesondere Wasser und/oder ein organisches Lösungsmittel, welches bevorzugt aus der Gruppe der mono- und polyfunktionellen Alkohole und/oder deren Etherverbindungen und/oder deren Esterverbindungen ist,
(iii) ggf. mindestens einen anionischen, kationischen, nichtionischen oder amphoteren Emulgator, bevorzugt mindestens einen nichtionischen Emulgator, besonders bevorzugt Ethoxylierungsprodukte aliphatischer Alkohole,
wobei der Emulgator (iii) bezogen auf Komponente (i) bevorzugt mit 2-100 Gew.%, stärker bevorzugt mit 10-80 Gew.%, besonders bevorzugt mit 20-70 Gew.% zugegen ist, und/oder
(iv) ggf. mindestens ein Additiv, beispielsweise einen Verflüssiger, Glycerin, Harnstoff und/oder mindestens eine Säure und/oder mindestens ein Weichgriffmittel, bevorzugt ein organomodifiziertes Polysiloxan,
wobei die Zusammensetzung bezogen auf ihre Gesamtmasse bevorzugt 0,005-99,9 Gew.%, stärker bevorzugt 5-99 Gew.%, besonders bevorzugt 10-90 Gew.% der Komponente (i) enthält.

11. Zusammensetzung gemäß Anspruch 10, welche als Emulsion, bevorzugt als o/w-Emulsion vorliegt.

12. Verwendung eines Polysiloxans gemäß einem der Ansprüche 1-6 oder einer Zusammensetzung gemäß einem der Ansprüche 10-11 zur Behandlung eines Substrats, insbesondere zur Ausrüstung eines textilen Substrats, wobei das textile Substrat bevorzugt ein Gewebe, Gewirk, Vlies, Faser und/oder Leder ist und besonders bevorzugt natürliche und/oder synthetische Fasern enthält, oder
als Additiv in Farb-, Lasur-, Lack- und/oder Autopflege-Formulierungen.

13. Verwendung gemäß Anspruch 12 zur Verbesserung des Weichgriffs des textilen Substrats, und/oder
zur Verbesserung der Benetzungs-, Spreitungs- und/oder Verlaufseigenschaften von Farb-, Lasur-, Lack- und/oder Autopflege-Formulierungen.

14. Substrat, insbesondere textiles Substrat, welches mit Polysiloxanen gemäß einem der Ansprüche 1-6 behandelt ist, wobei das textile Substrat bezogen auf seine Gesamtmasse bevorzugt 0,04-2,4 Gew.%, besonders bevorzugt 0,08-1,2 Gew.% an Polysiloxanen enthält.

15. Verfahren zur Behandlung eines Substrats umfassend die Schritte
(i) Bereitstellen eines Substrats,
(ii) Aufbringen des Polysiloxans gemäß einem der Ansprüche 1-6 oder einer Zusammensetzung gemäß einem der Ansprüche 10-11 auf das Substrat, und
(iii) gegebenenfalls Behandeln des nach Schritt (ii) erhaltenen Substrats bei erhöhter Temperatur, bevorzugt zur Entfernung von Wasser, insbesondere bei einer Temperatur von 110-150 °C,
wobei Schritt (ii) bevorzugt durch Foulardieren, Sprühen, Streichen, Tauchen, Pflatschen und/oder durch Ausziehverfahren erfolgt.
